(19) **Europäisches Patentamt**
**European Patent Office**
**Office européen des brevets**

(11) **EP 4 521 074 A1**

(12) **EUROPÄISCHE PATENTANMELDUNG**

(43) Veröffentlichungstag:
**12.03.2025 Patentblatt 2025/11**

(21) Anmeldenummer: **23196561.7**

(22) Anmeldetag: **11.09.2023**

(51) Internationale Patentklassifikation (IPC):
**G01F 1/684** (2006.01)    **G01F 1/692** (2006.01)
**G01F 5/00** (2006.01)    **G01F 15/18** (2006.01)
**G01F 1/688** (2006.01)

(52) Gemeinsame Patentklassifikation (CPC):
**G01F 1/6845; G01F 1/692; G01F 5/00; G01F 5/005;**
**G01F 15/185;** G01F 1/6888

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder: **Hahn-Schickard-Gesellschaft**
**für angewandte Forschung e. V.**
**70569 Stuttgart (DE)**

(72) Erfinder:
• **Dehé, Alfons**
**72770 Reutlingen (DE)**
• **Billat, Sophie**
**78052 VS-Weilersbach (DE)**

(74) Vertreter: **Hertin und Partner**
**Rechts- und Patentanwälte PartG mbB**
**Kurfürstendamm 54/55**
**10707 Berlin (DE)**

(54) **SENSORCHIP MIT EINEM INTEGRIERTEN STRÖMUNGSKANAL**

(57) In einem ersten Aspekt betrifft die Erfindung einen Sensorchip zur Messung mindestens eines Strömungsparameters eines Fluides. Der Sensorchip umfasst ein Substrat mit einer Vorderseite und einer Rückseite und einen thermischen Sensor. Der thermische Sensor umfasst ein Heizelement und eine Sensorkomponente, wobei das Heizelement der Bereitstellung eines Wärmefeldes und die Sensorkomponente der Erfassung einer Temperaturantwort dient, die abhängig ist von dem Einfluss des Fluides auf das Wärmefeld. Das Substrat ist monolithisch ausgebildet. Des Weiteren ist der thermische Sensor auf der Vorderseite des Substrates positioniert und ein Strömungskanal liegt innerhalb des Substrates und unterhalb des thermischen Sensors vor, wobei der Strömungskanal durch eine bereichsweise Entfernung des Substrates, vorzugsweise ausgehend von der Rückseite, gebildet wurde. Durch die Strömung des Fluides innerhalb des Strömungskanals ist der mindestens eine Strömungsparameter des Fluides durch den thermischen Sensor messbar.

Weiterhin betrifft die Erfindung ein Verfahren zur Herstellung des Sensorchips, eine Strömungssensoranordnung, eine Verwendung des Sensorchips oder Strömungssensoranordnung sowie ein System.

**EP 4 521 074 A1**

**Beschreibung**

Die Erfindung betrifft das technologische Gebiet der MEMS-Strömungssensorik. In einem ersten Aspekt betrifft die Erfindung einen Sensorchip zur Messung mindestens eines Strömungsparameters eines Fluides. Der Sensorchip umfasst ein Substrat mit einer Vorderseite und einer Rückseite und einen thermischen Sensor. Der thermische Sensor umfasst ein Heizelement und eine Sensorkomponente, wobei das Heizelement der Bereitstellung eines Wärmefeldes und die Sensorkomponente der Erfassung einer Temperaturantwort dient, die abhängig ist von dem Einfluss des Fluides auf das Wärmefeld. Das Substrat ist monolithisch ausgebildet. Des Weiteren ist der thermische Sensor auf der Vorderseite des Substrates positioniert und ein Strömungskanal liegt innerhalb des Substrates und unterhalb des thermischen Sensors vor, wobei der Strömungskanal durch eine bereichsweise Entfernung des Substrates, vorzugsweise ausgehend von der Rückseite, gebildet wurde. Durch die Strömung des Fluides innerhalb des Strömungskanals ist der mindestens eine Strömungsparameter des Fluides durch den thermischen Sensor messbar.

Weiterhin betrifft die Erfindung ein Verfahren zur Herstellung des Sensorchips, eine Strömungssensoranordnung, eine Verwendung des Sensorchips oder Strömungssensoranordnung sowie ein System.

Hintergrund und Stand der Technik

Strömungssensoren werden in verschiedenen Anwendungen bei strömenden Fluiden verwandt und sind dazu eingerichtet, einen Strömungsparameter des Fluides zu messen. So kann beispielsweise die Geschwindigkeit, die Strömungsrichtung und/oder die Viskosität des Fluides mittels eines Strömungssensors erfasst werden, ohne hierbei auf die beispielhaft genannten Parameter beschränkt zu sein. Typischerweise wird der Einfluss der Strömung, d. h. der Einfluss, der durch die Bewegung des Fluides resultiert, für die Ausübung der Messung durch den Strömungssensor ausgenutzt.

In einigen Anwendungen ist es üblich, eine sogenannte Bypass-Konfiguration bereitzustellen, in der ein Strömungsparameter eines Fluides vermessen wird. Bei einer Bypass-Konfiguration wird ein Strömungsbegrenzer oder Durchflussbegrenzer innerhalb eines Hauptkanals eingebracht, in dem das Fluid strömt. Bei der Hauptkanal kann es sich beispielsweise um eine Rohrleitung zum Transport einer Flüssigkeit oder innerhalb einer Industrieanlage handeln. Ferner wird ein Bypass (auch Bypass-Kanal oder Seitenkanal) mit dem Hauptkanal fluidisch verbunden. Durch den Durchflussbegrenzer resultiert ein Druckabfall, sodass im Hauptkanal in Abhängigkeit der Strömung des Fluides eine Druckdifferenz vorliegt. Bei entsprechender Anbindung des Bypasses an den Hauptkanal stromauf- und stromabwärts des Strömungsbegrenzers, wird das Fluid durch die Druckdifferenz in den Bypass geführt. Der Sensor, welcher zur Messung des Fluides eingesetzt wird, kann innerhalb oder angrenzend an den Bypass positioniert werden. Durch eine Bypass-Konfiguration kann eine zuverlässige Überführung des Fluides in hinreichender Nähe zum Sensor gewährleistet werden, ohne dass sich der Sensor im Hauptkanal befinden müsste und somit die Fluidströmung stören könnte. Zudem hängt die Fließgeschwindigkeit des Fluides im Bypass-Kanal unmittelbar von der Druckdifferenz ab, welche im Hauptkanal aufgrund des Durchfluss- oder Strömungsbegrenzers entsteht. Durch eine Messung der Fließgeschwindigkeit des Fluides im Bypass-Kanal kann somit ebenfalls eine Überwachung des Fließverhaltens des Fluides im Hauptkanal erfolgen.

Ein im Stand der Technik bewährtes Funktionsprinzip für den Betrieb von Strömungssensoren ist das thermische Messprinzip. Dabei umfasst der Strömungssensor zumeist ein Heizelement und mindestens einen Temperatursensor. Durch das Heizelement wird ein Wärmefeld bereitgestellt, das durch den Temperatursensor detektiert werden kann. Bei einer Strömung eines Fluides wird das von dem Heizelement bereitgestellte Wärmefeld moduliert. Die Modulation ist durch den Temperatursensor detektierbar, wobei die Modulation des Wärmefeldes von der Strömung des Fluides abhängig ist. Infolge der Modulation des Wärmefeldes lässt sich ein Strömungsparameter bestimmen. Das beschriebene Messprinzip ist dahingehend vorteilhaft, dass keine Bereitstellung von mechanisch beweglichen Komponenten erfolgen muss, sodass sich ein Herstellungsaufwand vermindert und hohe Robustheit erzielt werden kann.

Mittels sogenannter MEMS (mikroelektromechanische Systeme) können zudem thermische Strömungssensoren bereitgestellt werden, die eine sehr kompakte Ausgestaltung (im Mikrometerbereich) haben und eine hervorragende Funktionalität besitzen sowie mit geringen Herstellungskosten produziert werden können.

Ein MEMS-Strömungssensor, der das beschriebene Messprinzip nutzt, wird beispielsweise in Billat et al. (2008) beschrieben. Der Strömungssensor ist als Waferstack aufgebaut, d. h. der Strömungssensor umfasst mehrere Wafer bzw. Substrate, die aufeinander gestapelt vorliegen. Insbesondere umfasst der in Billat et al. (2008) offenbarte Strömungssensor ein Bodensubstrat und ein Deckelsubstrat, welche miteinander verbunden sind. Entlang des Bodensubstrates sind Öffnungen hineingeätzt, die als Eintrittsbereich und Austrittsbereich für das Fluid fungieren. Das Deckelsubstrat ist derart strukturiert, dass dieses eine Kavität aufweist, welche zum Bodensubstrat zeigt. Ein Strömungskanal wird innerhalb des Waferstacks eingebracht, sodass sich das Fluid ausgehend von dem Eintrittsbereich des Bodensubstrates in die Kavität des Deckelsubstrates ausbreiten und daraufhin über den Austrittsbereich des Bodensubstrates den Strömungssensor verlassen kann. Auf einer Oberseite des Deckelsubstrates ist eine Membran angebracht, auf welcher sich ein Heizelement und zwei Thermosäulen befinden. Durch die Strömung des Fluides innerhalb des Strömungskanals kommt es zu einer Modulation des vom Heizelement bereitgestellten Wärmefeldes, welche durch die Thermosäulen erfasst werden kann. Das Bodensubstrat wird vorzugsweise durch einen Glaswafer gebildet, während das Deckelsubstrat durch einen Siliziumwafer bereitgestellt wird.

Ein ähnlicher Aufbau für einen Strömungssensor wird in Palmer et al. (2012) offenbart. Auch der darin beschriebene Strömungssensor umfasst einen Waferstack umfassend ein Bodensubstrat und ein Deckelsubstrat, welche in dem Fall jeweils durch einen Siliziumwafer bereitgestellt werden. Das Deckelsubstrat ist mit dem Bodensubstrat durch Fusionsbonden verbunden. Der Strömungssensor eignet sich vorteilhaft zur Integration in weiteren auf Silizium-basierten Vorrichtungen. Auf dem Deckelsubstrat liegt eine Membran vor, auf der drei oder fünf mäanderartige Strukturen aufgebracht vorliegen, um als mindestens ein Heizelement und als Temperatursensoren zu fungieren. Der Strömungskanal erstreckt sich innerhalb des Waferstacks entlang des Bodensubstrates und des Deckelsubstrates. Demzufolge kann ein Fluid über einen Eintrittsbereich innerhalb des Bodensubstrates in eine Kavität des Deckelsubstrates und über den Austrittsbereich am Bodensubstrat den Strömungskanal passieren.

In der US 11,280,649 B2 wird ein Strömungssensor offenbart, welcher ebenfalls mehrstückig als ein Stack aufgebaut ist. Der in der US 11,280,649 B2 beschriebene Strömungssensor umfasst ein Substrat, welches mit einer Abdeckung verbunden ist. Der Einlassbereich und der Auslassbereich des Strömungskanals liegen an der Abdeckung vor. Auf dem Substrat ist eine Messkomponente auf eine Membran angebracht. Der Strömungskanal wird demzufolge durch den Eintrittsbereich und den Austrittsbereich an der Abdeckung sowie einem Volumen zwischen dem Substrat und der Abdeckung vorgegeben. Die Messkomponente auf der Membran, welche wiederrum auf dem Substrat positioniert ist, kann beispielsweise durch ein Heizelement und einen Temperatursensor bereitgestellt werden. Zwischen der Membran bzw. der Messkomponente und dem Rand des Substrates liegt ein Füllmaterial vor, sodass der Strömungskanal räumlich eingegrenzt wird.

Obwohl bereits mehrere Vorschläge für den Aufbau und die Funktionsweise von Strömungssensoren bekannt sind und diese individuelle vorteilhafte Wirkungen zeigen, liegt weiterhin ein Bedarf an Optimierung vor. Insbesondere sind die Strömungssensoren des Standes der Technik häufig dadurch gekennzeichnet, dass diese sie eine Mehrzahl von untereinander in Verbindung stehenden Komponenten aufweisen. Insbesondere der aufwendigere Aufbau als Stack führt dabei zu erhöhten Kosten in der Herstellung und zu möglichen Einschränkungen in Bezug auf deren Einsatz. Vor dem Hintergrund wäre es wünschenswert, einen verbesserten Strömungssensor bzw. Verfahren zu dessen Herstellung zu bieten, mit der mindestens ein Strömungsparameter eines Fluides gemessen werden kann.

Aufgabe der Erfindung

Aufgabe der Erfindung ist es, eine Vorrichtung zur Messung mindestens eines Strömungsparameters eines Fluides bzw. ein Verfahren zu deren Herstellung bereitzustellen, welche die Nachteile von aus dem Stand der Technik bekannten Strömungssensoren beseitigen. Bevorzugt soll sich die Vorrichtung dabei durch einen kompakten strukturellen Aufbau auszeichnen, welcher eine einfache und effiziente Herstellung erlaubt und vorzugsweise gleichzeitig einen Einsatz der Vorrichtung für eine Vielzahl von Anwendungszwecken ermöglicht.

Zusammenfassung der Erfindung

Die Aufgabe der Erfindung wird gelöst durch die unabhängigen Ansprüche. Weitere vorteilhafte Ausgestaltungen der Erfindung sind in den abhängigen Ansprüchen offenbart.

In einem ersten Aspekt betrifft die Erfindung einen Sensorchip zur Messung mindestens eines Strömungsparameters eines Fluides umfassend ein Substrat mit einer Vorderseite und einer Rückseite und einen thermischen Sensor umfassend ein Heizelement zur Bereitstellung eines Wärmefeldes und eine Sensorkomponente zur Erfassung einer Temperaturantwort des thermischen Sensors in Abhängigkeit eines Einflusses des Fluides auf das Wärmefeld, dadurch gekennzeichnet, dass das Substrat monolithisch ausgebildet ist, der thermische Sensor auf der Vorderseite des Substrates positioniert vorliegt und unterhalb des thermischen Sensors innerhalb des Substrates ein Strömungskanal vorliegt, welcher durch bereichsweise Entfernung des Substrates, vorzugsweise ausgehend von der Rückseite, gebildet wurde und einen Eintrittsbereich für einen Einlass des Fluides in den Strömungskanal und einen Austrittsbereich für einen Auslass des Fluides aus dem Strömungskanal aufweist, sodass auf Basis der Temperaturantwort des thermischen Sensors der mindestens eine Strömungsparameter des Fluides messbar ist.

Vorteilhafterweise zeichnet sich der erfindungsgemäße Sensorchip durch ein hohes Maß an Kompaktheit aus. Insbesondere werden keine Mehrzahl an Substraten oder aufwendige Strukturen benötigt, um einen Strömungskanal bereitzustellen, durch den das Fluid strömen kann. Stattdessen liegt der Strömungskanal des Sensorchips in einem einzelnen Substrat bzw. Wafer vor. Dies stellt eine wesentliche Abkehr zum Stand der Technik dar, erhöht die Robustheit und vereinfacht dessen Herstellung. Weiterhin weist der erfindungsgemäße Sensorchip vorteilhaft eine geringe Höhe auf, welche im Wesentlichen der Höhe des Substrates bzw. eines darin gebildeten Strömungskanals entspricht. Mithin ist eine einfache Integrationsmöglichkeit, des Sensorchips gegeben, beispielsweise in einer Bodenplatte, sodass der Sensorchip für vielseitige Anwendungszwecke zur Messung von strömenden Fluiden genutzt werden kann.

Ein weiterer Vorteil des Sensorchips ist, dass dieser mit einfachen und bewährten Verfahren der Halbleitertechnik und/oder der Mikrosystemtechnik hergestellt werden kann. Insbesondere ist die Herstellung schnell und kostengünstig möglich. Die einfachere Möglichkeit zur Herstellung des Sensors resultiert u. a. daraus, dass für die Ausgestaltung des Strömungskanals darauf verzichtet werden kann, verschiedene Substrate miteinander zu verbinden oder weitere Komponenten auf einem oder mehreren Substraten anbringen zu müssen. Anstelle aufwendiger Verfahren wird der Strömungskanal durch eine bereichsweise Entfernung, vorzugsweise ausgehend von der Rückseite, innerhalb eines monolithischen Substrates gebildet. Dies kann im Wesentlichen in einem Prozessschritt erfolgen. Die Abmessung des Strömungskanals kann durch die Entfernung des Substrates, wie im Folgenden erläutert, entsprechend der gewünschten Anwendung besonders präzise erfolgen. Vorteilhaft ist somit eine massenhafte Herstellung des Sensorchips mit geringen Kosten und einem hohes Maß an Reproduzierbarkeit möglich.

Durch die Bildung des Strömungskanals unmittelbar innerhalb des monolithischen Substrates durch eine bereichsweise Entfernung ist vorteilhaft insbesondere auch eine besonders feine Strukturierung mit hoher Präzision möglich. Durch die präzise Ausgestaltungsoption des Sensorchips, insbesondere des Strömungskanals, können zudem auch unerwünschte Turbulenzen vermieden werden, die innerhalb des Strömungskanals, insbesondere am Eintrittsbereich, eintreten und hierdurch die Messung durch den thermischen Sensor einschränken könnten. Insofern kann durch den Sensorchip auch ein hoher Grad an Sensitivität erlangt werden, sodass eine besonders präzise Messung des mindestens eines Strömungsparameters des Fluides ermöglicht wird.

Weiterhin lassen sich die fluidischen Eigenschaften des Strömungskanals vorteilhaft besonders präzise und konstant einstellen. So hängt der fluidische Widerstand des erfindungsgemäßen Strömungskanals, wie im Folgenden näher erläutert, insbesondere von dessen Breite ab, welche beispielsweise durch bekannte Ätzverfahren zur bereichsweisen Entfernung des Substrats äußerst präzise eingestellt werden können. Fehlertoleranzen, welche inhärent bei der Bildung von Strömungskanälen in zusammengesetzten Stacks aufgrund der Verbindungstechnik entstehen könnten, werden vermieden. Durch die Bildung des Strömungskanals innerhalb des monolithischen Substrates kann zudem gewährleistet werden, dass die Abmessungen des Strömungskanals sich konstant verhalten und insbesondere nicht von dem Fließverhalten des Fluides im Strömungskanal selbst beeinflusst werden.

Die Möglichkeit einer besonders präzisen Vorgabe eines fluidischen Widerstands des Strömungskanals, welcher während der Messungen konstant gehalten werden kann, führt dazu, dass sich der erfindungsgemäße Sensorchip auf besondere Weise für Messungen von Strömungen eines Fluides in einer sogenannten Bypass-Konfiguration eignet.

Bei einer Bypass-Konfiguration wird die Strömung eines Fluides in einem Hauptkanal durch Messung eines Druckabfalls in einem Nebenkanal, dem sogenannten Bypass, bestimmt. Der Bypass ist mit dem Hauptkanal in der Regel in einem Einlass- und Auslassbereich fluidisch verbunden, sodass eine Einleitung des Fluides vom Hauptkanal in den Bypass und eine Rückführung des Fluides vom Bypass zurück in den Hauptkanal ermöglicht werden kann. Im Hauptkanal selbst liegt zwischen den Bereichen des Einlass bzw. Auslass ein Durchflussbegrenzer vor, welcher einen Druckabfall bewirkt. Die durch den Durchflussbegrenzer erzeugte Druckdifferenz lässt sich anhand der resultierenden Strömungen durch den Bypass-Kanal messen, um Rückschlüsse auf das Fließverhalten des Fluides im Strömungskanal ziehen zu können.

Die Messgenauigkeit hängt bei einem solchen Verfahren direkt von einer möglichst präzisen Einstellung eines fluidischen Widerstands ab, welcher zudem während der Messung konstant bleiben muss, um Verfälschungen der Messergebnisse zu vermeiden. Beide Voraussetzungen können durch den erfindungsgemäßen Sensorchip auf einfache und robuste Weise gewährleistet werden.

Der Sensorchip dient insbesondere der Messung mindestens eines Strömungsparameters eines Fluides. Demzufolge kann der Sensorchip im erfindungsgemäßen Kontext auch als Strömungssensor bezeichnet werden. Das Fluid bezeichnet das Medium, welches insbesondere durch den Strömungskanal fließen kann, von dem mindestens ein Strömungsparameter mittels des Sensorchips gemessen werden soll. Das Fluid selbst meint bevorzugt ein Medium, welches sich unter Einfluss von Scherkräften kontinuierlich verformen kann. Insbesondere kann das Fluid als eine Flüssigkeit oder als ein Gas vorliegen.

Der mindestens eine Strömungsparameter bezeichnet bevorzugt eine Größe, mit der das Fluid in seinen physikalischen und/oder chemischen Eigenschaften charakterisiert werden kann. Vorzugsweise kann der Strömungsparameter ausgewählt sein aus einer Gruppe umfassend eine Strömungsgeschwindigkeit, ein Druck, ein Volumenstrom, eine Strömungsfrequenz (bei einer oszillierenden Strömung des Fluides), eine Konzentration und/oder Zusammensetzung des Fluides, ohne auf diese bevorzugten Parameter beschränkt zu sein.

In struktureller Hinsicht umfasst der Sensorchip bevorzugt zumindest das (monolithische) Substrat, den Strömungskanal, einen thermischen Sensor, der wiederrum ein Heizelement und eine Sensorkomponente umfasst. Weitere Komponenten für den Sensorchip können ebenfalls bevorzugt sein, welche im Folgenden noch beschrieben werden sollen.

Der thermische Sensor umfasst bevorzugt ein Heizelement und einen thermischen Sensor. Das Heizelement dient ferner insbesondere der Bereitstellung eines Wärmefeldes. Das Wärmefeld bezeichnet vorzugsweise die Wärme als solche, die von dem Heizelement ausgeht. Insofern wird das Wärmefeld bzw. die Wärme insoweit übertragen, dass das Wärmefeld des Heizelementes sich innerhalb des Strömungskanals ausbreiten und vom Fluid durchströmt werden kann. Die Begriffe Wärmefeld und Wärmestrom können im erfindungsgemäßen Kontext synonym verwandt werden.

Bevorzugt beeinflusst das Fluid durch seine Strömung innerhalb des Strömungskanals das Wärmefeld. Dieser Einfluss und die damit einhergehende Änderung des Wärmefeldes ist durch die Sensorkomponente des thermischen Sensors messbar. Die Änderung des Wärmefeldes durch die Strömung des Fluides kann auch als Modulation des Wärmefeldes oder Modulation eines Wärmestroms bezeichnet werden. Der Einfluss des Fluides auf das Wärmefeld bzw. die Modulation spiegelt sich insbesondere in einer Temperaturantwort wider, die von der Sensorkomponente des thermischen Sensors erfasst wird. Mit anderen Worten ausgedrückt, dient die Sensorkomponente dazu, eine Temperaturantwort zu erfassen, die wiederrum abhängig ist von der Modulation des Wärmefeldes durch das Fluid.

Die Temperaturantwort meint bevorzugt ein Messsignal, das von der Sensorkomponente erfasst wird. Die Temperaturantwort stellt somit bevorzugt eine Reaktion des thermischen Sensors, insbesondere der Sensorkomponente, in Bezug auf die Eigenschaften bzw. die Strömung des Fluides hinsichtlich seiner Wirkung auf das Wärmefeld dar. Die Sensorkomponente kann vorzugsweise als ein Temperatursensor vorliegen, sodass bevorzugt die Temperaturantwort von dem Temperatursensor erfasst wird. Es kann ebenfalls bevorzugt sein, dass die Sensorkomponente durch das Heizelement selbst bereitgestellt wird, sodass bevorzugt die Temperaturantwort ein Messsignal des Heizelementes darstellt, welches durch die Strömung des Fluides beeinflusst wird. Die Temperaturantwort kann bevorzugt eine thermische Größe betreffen, welche insbesondere von der Sensorkomponente ausgelesen werden kann, wie z. B. die Temperatur selbst. Die Temperaturantwort kann vorzugsweise auch ein elektrisches Signal meinen, das bevorzugt durch eine elektrische Spannung und/oder einen elektrischen Strom beschrieben werden kann.

Ferner umfasst der Sensorchip vorzugweise ein Substrat. Das Substrat erfüllt insbesondere zwei Funktionen. Einerseits ist auf einer Vorderseite des Substrates bevorzugt der thermische Sensor positioniert. Mithin fungiert das Substrat als Träger für den thermischen Sensor. Andererseits liegt innerhalb des Substrates der Strömungskanal vor, sodass das Substrat gleichzeitig der Bereitstellung des Strömungskanals dient. Mit anderen Worten ausgedrückt, fungiert das Substrat vorzugsweise sowohl als Träger für den thermischen Sensor als auch für einen Strömungskanal, welcher vorzugsweise mindestens teilweise ebenfalls unterhalb des thermischen Sensors verläuft.

Das Substrat ist bevorzugt monolithisch. Mit monolithisch ist im erfindungsgemäßen Kontext insbesondere ein einstückiges Substrat gemeint. Mithin ist es bevorzugt, dass das Substrat als ein einzelnes Substrat vorliegt und nicht mehrstückig durch Verbindungen (z. B. durch Bonding oder Kleben) von zwei oder mehr Substraten erhalten wurde. Ein unbearbeitetes Substrat, d. h. ein Substrat, in dem noch kein Strömungskanal eingebracht ist, kann vorzugsweise als ein monolithischer Block (beispielsweise als Wafer) bereitgestellt werden. Durch die monolithische Ausgestaltung des Substrates wird insbesondere ein stackartiger Aufbau für den thermischen Sensor vermieden, d. h. es werden erfindungsgemäß nicht mehrere Substrate aufeinandergestapelt und/oder miteinander verbunden.

Stattdessen wird der Strömungskanal in einem einzigen monolithischen Substrat eingebracht. Die Vorderseite bezeichnet vorzugsweise eine obere Seite des Substrates, auf welcher der thermische Sensor angebracht vorliegt, vorzugsweise auf einer Membran, welche von dem Substrat gehalten wird, wie hierin näher erläutert. Insofern bedeutet die Aussage, dass der Strömungskanal unterhalb des thermischen Sensors verläuft vorzugsweise, dass der Strömungskanal auf jener Seite des thermischen Sensors verläuft, welche sich innerhalb des Substrates befindet. Dadurch, dass der thermische Sensor auf einer (oberen) Vorderseite des Substrates angebracht ist, folgt durch die Integration des Strömungskanals innerhalb des Substrates, dass der Strömungskanal unterhalb des thermischen Sensors vorliegt. Die Begriffe ober- und unterhalb sind somit nicht in Bezug auf eine Richtung der Schwerkraft zu verstehen, sondern in Bezug auf eine definierte (obere) Vorderseite mit thermischen Sensor und (untere) Rückseite des Substrates.

Vorzugsweise wird der Strömungskanal ausgehend von der Rückseite durch eine bereichsweise Entfernung des Substrates gebildet. Die Rückseite des Substrates bezeichnet eine Oberfläche, die gegenüberliegend der Vorderseite vorliegt, d. h. bevorzugt gegenüberliegend von einer (oberen) Seite des Substrates, auf welcher der thermische Sensor positioniert vorliegt.

Die bereichsweise Entfernung des Substrates ausgehend von der Rückseite kann derart erfolgen, dass der Strömungskanal hinsichtlich seiner Höhe im Wesentlichen, oder bevorzugt exakt, der Höhe des Substrates entspricht. Ebenfalls kann es bevorzugt sein, dass die bereichsweise Entfernung des Substrates derart erfolgt, dass eine Restdicke am Substrat verbleibt. Bei einer entlang der Höhe des Substrates vollständigen Entfernung des Substrates zur Ausbildung eines Strömungskanals kann eine bereichsweise Entfernung des Substrates in Vorzugsformen auch ausgehend von einer Vorderseite des Substrates erfolgen, wobei die Entfernung auch in diesem Fall bevorzugt derart erfolgt, dass der Strömungskanal zur Rückseite des Substrates offen ist.

Die bereichsweise Entfernung des Substrates zur Bereitstellung des Strömungskanals ist am Sensorchip feststellbar, insbesondere dadurch, dass der Strömungskanal unterhalb des thermischen Sensors am Substrat selbst eingebracht vorliegt. Die bereichsweise Entfernung des Substrates zur Bereitstellung des Strömungskanals meint insbesondere eine Entfernung von Abschnitten des Substrates (z. B. durch bekannte Ätzverfahren), um eine Ausgestaltung des Strömungskanals vorzunehmen. Insbesondere liegt durch bzw. nach der bereichsweisen Entfernung des Substrates ein freies Volumen innerhalb des Substrates vor. Das freie Volumen bildet den Strömungskanal. Der Strömungskanal kann somit vorzugsweise seitlich durch das Substrat begrenzt sein.

Mit anderen Worten ausgedrückt, meint der Strömungskanal bevorzugt das freie Volumen innerhalb des Substrates, welches durch die bereichsweise Entfernung des Substrates erlangt wurde. Der Strömungskanal umfasst insbesondere einen Eintrittsbereich und einen Austrittsbereich. Zwischen dem Eintrittsbereich und dem Austrittsbereichs liegt ein Raumabschnitt vor, durch den das Fluid strömen kann. Mithin umfasst der Strömungskanal insbesondere den Eintrittsbereich, den Austrittsbereich und den dazwischenliegenden Raumabschnitt. Der Strömungskanal kann dabei in Vorzugsformen seitlich vom Substrat begrenzt sein, während der Strömungskanal nach oben durch eine Membran begrenzt wird, welche vom Substrat gehalten wird. In bevorzugten Ausführungsformen kann der Strömungskanal auch durch das Substrat selbst nach oben begrenzt sein, sofern bei einer rückseitigen Entfernung des Substrates vorzugsweise eine obere Restdicke verbleibt.

Nach unten wird der Strömungskanal vorzugsweise hingegen durch eine weitere Komponente, vorzugsweise eine sogenannte Bodenplatte, begrenzt, wobei die Bodenplatte wie in Bezug auf die erfindungsgemäße Sensoranordnung näher erläutert vorzugsweise zwei Öffnungen aufweist, welche mit einem Eintrittsbereich für einen Einlass des Fluides in den Strömungskanal und dem Austrittsbereich für einen Auslass des Fluides aus dem Strömungskanal korrespondieren. Es kann jedoch auch bevorzugt sein, dass ein Eintritts- oder Austrittsbereich des Strömungskanals nicht auf einer Rückseite des Substrates gebildet wird, sondern vorderseitig, beispielsweise durch die Bereitstellung eines Öffnung in einer vorderseitigen Membran, welche den Strömungskanal nach oben begrenzt. In diesem Fall kann es beispielsweise bevorzugt sein, dass eine Bodenplatte lediglich eine Öffnung bereitstellt, welche mit einem Eintrittsbereich (oder Austrittsbereich) des Strömungskanals korrespondiert, wobei einer weitere Öffnung auf der Vorderseite des Sensorchips, beispielsweise innerhalb einer Membran, mit dem Austrittsbereich (Eintrittsbereich) korrespondiert.

Vorteilhafterweise kann durch die bereichsweise Entfernung des Substrates, vorzugsweise ausgehend von einer Rückseite, in einem Prozessablauf die Strukturierung des Strömungskanals vorgenommen werden. Dies kann insbesondere in einem Prozessschritt erfolgen. Es kann ebenfalls bevorzugt sein, dass mehrere Prozessschritte ausgeführt werden, um den Strömungskanal bereitzustellen. Der Eintrittsbereich stellt einen Übergangsbereich dar, über den das Fluid in den Strömungskanal hineingelangt. Entsprechend stellt der Austrittsbereich einen Übergangsabschnittes des Strömungskanals dar, durch den das Fluid den Strömungskanal verlassen kann.

Mithin ist es bei einer Messung des mindestens einen Strömungsparameters durch den Sensorchip bevorzugt, dass das Fluid ausgehend von dem Eintrittsbereich in den Strömungskanal hineinströmt und ausgehend von dem Austrittsbereich den Strömungskanal verlässt. Dies kann beispielsweise in einer Bypass-Konfiguration implementiert werden, bei der das Fluid ausgehend von einem Hauptkanal durch den Strömungskanal fließt und zurück in den Hauptkanal gelangt.

Der Strömungskanal gibt insbesondere einen Pfad vor, durch den das Fluid innerhalb des Sensorchips strömen kann. Durch die Ausgestaltung des Strömungskanals kann bevorzugt zudem eine hinreichende Nähe des strömenden Fluides in Bezug auf den thermischen Sensor gewährleistet werden, sodass eine Messung von Strömungsparametern des Fluides anhand einer Modulation des vom Heizelement bereitgestellten Wärmefeld möglich ist. Anders ausgedrückt, wird durch den Strömungskanal eine Pfad für die Strömung des Fluides bereitgestellt, durch den das Fluid sich ausbreiten kann, um von dem thermischen Sensor ausgemessen zu werden. Wie obig ausgeführt, wird durch das Fluid, welches durch den Strömungskanal strömt, das Wärmefeld moduliert bzw. beeinflusst, was durch die an der Sensorkomponente zu erfassende Temperaturantwort festgestellt werden kann. Auf Basis der Temperaturantwort kann der mindestens eine Strömungsparameter des Fluides gemessen werden.

Der Sensorchip kann für verschiedene thermische Messprinzipen ausgelegt sein und dazu konfiguriert sein, bevorzugt unter Einsatz einer elektronischen Schaltung, in einer oder verschiedenen Moden betrieben zu werden, um eine Messung von mindestens einem Strömungsparameter vorzunehmen.

Beispielsweise kann der Sensorchip ein anemometrisches Messprinzip nutzen, bei dem ein Heizelement vorzugsweise in einer Membran aufgebracht oder eingebettet vorliegt und die Fluidströmung anhand eines Wärmetransportes in das Fluid gemessen wird, welches sich mit der Strömungsgeschwindigkeit ändert. So kann es bevorzugt sein, dass das Heizelement mit einer konstanten Leistung eingespeist oder auf eine konstante Temperatur gehalten wird. Durch die Strömung des Fluides innerhalb des Wärmefeldes ergibt sich durch Konvektion bzw. Wärmetransport eine Temperaturabnahme, wenn eine konstante Leistung eingespeist wurde oder es resultiert eine notwendige Erhöhung der für das Heizelement zugeführten Leistung, wenn eine Temperatur des Heizelementes konstant gehalten werden soll. Die Konvektion ist proportional zur Flussrate des Fluides, sodass durch die Temperaturabnahme oder durch die Erhöhung der Leistung zur Beibehaltung der Temperatur beispielsweise die Strömungsgeschwindigkeit des Fluides bestimmt werden kann. Vorzugsweise kann die Sensorkomponente durch das Heizelement selbst gebildet werden, welche beispielsweise anhand eines temperaturabhängigen Widerstandes eine strömungsabhängige Temperaturabnahme bestimmen kann.

Es kann ebenfalls bevorzugt sein, dass der Sensorchip für ein kalorimetrischen Messprinzip ausgelegt ist. Bei einem kalorimetrischen Messprinzip wird vorzugsweise ausgenutzt, dass sich das Temperaturprofil um das Heizelement aufgrund der Konvektion durch die Strömung des Fluides ändert. Vorzugswird werden ein, vorzugsweise zwei Temperatur-sensoren, stromabwärts und stromaufwärts des Heizelementes positioniert. In Abhängigkeit der Strömung des Fluides wird eine stromabwärts und stromaufwärts vom Heizelement gemessene Temperatur unterschiedlich sein. Durch eine Messung der Temperarturdifferenz kann ein Rückschluss auf einen Strömungsparameter des Fluides ermöglicht werden. Das Heizelement kann mit einer konstanten Spannung, einem konstantem Strom, einer konstanter Leistung oder auf eine konstante Temperatur beheizt werden.

Ferner kann es bevorzugt sein, den Sensorchip für einen sogenannten Time-of-Flight (TOF)-Messprinzip auszulegen. Dabei wird bevorzugt die Zeit zwischen dem Moment, in dem ein Ansteuerungssignal durch das Heizelement geleitet wird und dem Zeitpunkt, an dem ein maximaler Temperaturanstieg an einer Sensorkomponente, beispielsweise einem Temperatursensor, in einem bekannten Abstand zum Heizelement gemessen wird. Je höher die Durchflussrate ist, desto kürzer ist die sogenannte TOF.

Durch den Sensorchip, insbesondere der Temperaturantwort des thermischen Sensor, kann bevorzugt weitere Eigenschaften des Fluides bestimmt werden, wie beispielsweise eine Wärmeleitfähigkeit, eine Dichte, einen Druck, eine spezifische Wärmekapazität, eine Wärmeleitfähigkeit, eine Konzentration und/oder eine Zusammensetzung des Fluides.

Dem Fachmann ist bekannt, dass beispielsweise mittels einer oszillierenden Ansteuerung eine frequenzabhängige Temperaturantwort beispielsweise genutzt werden kann, um einen Rückschluss auf eine Wärmeleitfähigkeit und/oder volumetrischen Wärmekapazität eine Fluides zu erhalten. So kann beispielsweise eine Bestimmung einer Phase zwischen einem oszillierenden Ansteuerungssignal und eine Temperaturantwort insbesondere genutzt werden, um eine Wärmeleitfähigkeit zu bestimmen. Eine Amplitude einer Temperaturantwort bei oszillierende Ansteuerung kann insbesondere neben der Wärmeleitfähigkeit auch von einer volumetrischen Wärmekapazität abhängen. Mithin kann über eine Phase und Amplitude einer Temperaturantwort gegenüber einer oszillierenden Ansteuerung beispielsweise eine Wärmeleitfähigkeit und/oder volumetrische Wärmekapazität des Fluides werden. Anhand dieser thermischen Parameter lassen sich weiterhin auch Rückschlüsse beispielsweise auf eine Zusammensetzung des Fluides und/oder Konzentration einer Komponente innerhalb eines Mischfluides schließen. Sind beispielsweise eine Wärmeleitfähigkeit und/oder volumetrische Wärmekapazität verschiedene Komponente eines Mischfluides, z.B. eines Mischgases bekannt, lassen sich anhand einer Bestimmung der Wärmeleitfähigkeit und/oder volumetrische Wärmekapazität des gesamten Fluides Rückschlüsse auf die Anteile der einzelnen Komponenten ziehen.

In bevorzugten Ausführungsform ist der Sensorchip dadurch gekennzeichnet, dass der Strömungskanal eine Höhe aufweist, welche im Wesentlichen einer Höhe des monolithischen Substrates entspricht, wobei eine Breite des Strömungskanals an dessen schmalstem Abschnitt vorzugsweise kleiner ist als die Höhe des Strömungskanal, vorzugweise um einen Faktor von 1,5, 2, 3, 4, oder mehr.

In bevorzugten Ausführungsform ist der Sensorchip dadurch gekennzeichnet, dass der Strömungskanal eine im Wesentlichen konstante Breite, beispielsweise von weniger als 500 $\mu$m, vorzugsweise weniger als 100 $\mu$m, 50 $\mu$m oder weniger als 30 $\mu$m aufweist und wobei die Höhe des Strömungskanals vorzugsweise im Wesentlichen der Höhe des Substrates entspricht.

In weiteren bevorzugten Ausführungsform ist der Sensorchip dadurch gekennzeichnet, dass der Strömungskanal mindestens einen verjüngten und/oder aufgeweiteten Abschnitt aufweist, wobei die Breite des verjüngten Abschnittes vorzugsweise weniger als 500 $\mu$m, vorzugsweise weniger als 100 $\mu$m, 50 $\mu$m oder weniger als 30 $\mu$m ist und wobei die Höhe des Strömungskanals vorzugsweise im Wesentlichen der Höhe des Substrates entspricht.

Eine (minimale) Breite des Strömungskanals ist dabei vorzugweise stets kleiner als eine maximale Höhe des Strömungskanals, welche in besonders bevorzugten Ausführungsformen im Wesentlichen konstant ist und im Wesentlichen einer Höhe des Substrates bzw. des Wafers entspricht. Vorzugsweise ist eine (minimale) Breite des Strömungskanals mindestens um einen Faktor 1,5, 2, 3, 4 oder 5 oder mehr kleiner als eine (maximale) Höhe des Strömungskanals. Eine minimale Breite entspricht vorzugsweise der Breite des Strömungskanals an dessen schmalstem Abschnitt.

Wie weiter unten erläutert, ist für die Ausprägung des fluidischen Widerstandes insbesondere die (minimale) Breite des Strömungskanals von Bedeutung.

Für die Ausprägung eines fluidischen Widerstandes kann es entsprechend bevorzugt sein, einen Strömungsabschnitt mit einer, wie obig ausgeführt, konstanten, vorzugsweise gegenüber der Höhe des Strömungskanals, geringen Breite bereitzustellen.

Der thermische Sensor wird in dem Fall vorzugsweise oberhalb eines beliebigen Abschnittes des Strömungskanals positioniert, beispielsweise in einer mittigen Position in Bezug auf einen Einlass- oder Auslassbereich. Mit einer mittigen Positionierung ist bevorzugt eine derartige Positionierung des thermischen Sensors auf der Vorderseite gemeint, sodass der thermische Sensor im Wesentlichen entlang der Hälfte (der Länge) des Strömungskanals angebracht ist. Es kann ebenfalls bevorzugt sein, den thermischen Sensor nicht mittig auf der Vorderseite des Substrates zu positionieren, sondern näher zum Eintrittsbereich oder zum Austrittsbereich.

Die Bereitstellung eines Strömungskanals mit einer im Wesentlichen konstanten Breite und Höhe (entsprechend der Höhe des Substrates) stellt eine besonders einfache Geometrie für den Strömungskanal dar, welche sowohl die Herstellung vereinfacht als auch für ein gleichmäßiges, gut messbares Strömungsverhalten des Fluides innerhalb des Strömungskanals sorgt.

Um einen Interaktionsbereich des thermischen Sensors mit dem im Strömungskanal strömenden Fluid zu vergrößern, kann es ebenso bevorzugt sein, einen aufgeweiteten Bereich im Strömungskanal bereitzustellen, wobei der aufgeweitete Bereich vorzugsweise eine höhere Breite aufweist gegenüber weiteren Abschnitten des Strömungskanals (wie insbesondere einem verjüngten Bereich). Auch für Ausführungsformen eines Strömungskanals, bei dem die Breite variiert, beispielsweise zur Bereitstellung eines aufgeweiteten Abschnittes, welcher sich unterhalb der Sensorkomponente erstreckt, ist es weiterhin bevorzugt, dass die Höhe des Strömungskanals im Wesentlichen konstant ist und der Höhe des Substrates bzw. Wafers entspricht.

Im Falle eines Strömungsabschnittes mit variierender Breite bestimmt ein verjüngter Abschnitt vorzugsweise den fluidischen Widerstand.

Ein verjüngter Abschnitt des Strömungskanals bezeichnet bevorzugt einen Abschnitt, der im Vergleich zu weiteren Abschnitten des Strömungskanals eine geringere Breite aufweist. Insbesondere ist hiermit gemeint, dass es bevorzugt ist, dass der Strömungskanal in seinem Querschnitt keinen konstanten Verlauf hat. Es ist bevorzugt, dass der Strömungskanal Abschnitte aufweist, die eine unterschiedliche Breite aufweisen. Der Abschnitt des Strömungskanals mit der kleinsten Breite kann bevorzugt als verjüngter Abschnitt im erfindungsgemäßen Kontext bezeichnet werden.

Die Höhe des Strömungskanals entspricht bevorzugt im Wesentlichen der Höhe des Substrates. Insbesondere entspricht die Höhe des Strömungskanals im Wesentlichen der Höhe des Substrates, wenn zur Bereitstellung des Strömungskanals eine durchgehende bereichsweise Entfernung des Substrates vorgenommen wurde. Die Höhe des Strömungskanals kann sich bevorzugt auch im Wesentlichen durch die Höhe des Substrates abzüglich einer verbleiben Restdicke am Substrat ergeben. Mithin ist mit der Höhe des Strömungskanals bevorzugt die Dimension gemeint, die sich entlang der Vorderseite und der Rückseite des Substrates erstreckt, d. h. zwischen der Seite des Substrates, auf der sich der thermische Sensor befindet und einer gegenüberliegenden Seite, von der aus die bereichsweise Entfernung zur Bereitstellung des Strömungskanals vorgenommen wurde. Vorzugsweise ist die Höhe des Strömungskanals entlang dessen Länge bzw. dessen Verlauf entlang der Fluidrichtung konstant ist. Es kann aber auch bevorzugt sein, dass die Höhe variiert. Im letzteren Fall entspricht vorzugsweise eine maximale Höhe im Wesentlichen der Höhe des Substrates.

Begriffe wie im Wesentlichen, ca. etc. beschreiben bevorzugt einen Toleranzbereich von weniger als $\pm$ 20 %, bevorzugt weniger als $\pm$ 10 %, besonders bevorzugt weniger als $\pm$ 5 %, noch stärker bevorzugt weniger als $\pm$ 2 % und insbesondere weniger als $\pm$ 1 % und umfassen insbesondere den exakten Wert. Ähnlich beschreibt bevorzugt Größen, die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 % (oder mehr).

Die Breite und Höhe des Strömungskanals beziehen sich bevorzugt auf eine Querschnittsebene, welche orthogonal zum Vektor der Fluidströmung innerhalb des Kanals stehts. Während die Höhe vorzugsweise die Ausdehnung des Kanals von unten nach oben bzw. entlang der Richtung von einer Rück- zur Vorderseite betrifft, entspricht die Breite des Strömungskanals bevorzugt einer Dimension, die orthogonal zur Höhe steht. Das Produkt aus Breite und Höhe ergibt die Querschnittsfläche des Strömungskanals.

Die Länge des Strömungskanals betrifft bevorzugt eine Ausdehnung des Kanals, entlang der Strömungsrichtung des Fluides innerhalb Strömungskanals. Die Länge des Strömungskanals entspricht mithin bevorzugt einer Strecke, welche von dem Eintrittsbereich bis zum Austrittsbereich des Strömungskanals reicht. Vorzugsweise kann die Länge des Strömungskanals im Wesentlichen der Länge einer Verbindungslinie zwischen dem Eintritts- und Austrittsbereiches des monolithischen Substrates entsprechen, beispielsweise sofern der Strömungskanal im Wesentlichen geradlinig ist. Es kann ebenfalls bevorzugt sein, dass der Strömungskanal eine höhere Länge aufweist als die Verbindungslinie zwischen Eintritts- und Austrittsbereich beispielsweise sofern der Strömungskanal kurvig bzw. gewunden ausgestaltet wird.

In einer weiteren bevorzugten Ausführungsform ist der Sensorchip dadurch gekennzeichnet, dass der Strömungskanal eine Höhe aufweist von ca. 100 - 1 000 $\mu$m, bevorzugt von ca. 200 - 500 $\mu$m, und/oder eine Länge von ca. 100 - 10 000 $\mu$m, bevorzugt von ca. 500 - 2 000 $\mu$m.

Der Strömungskanal kann bevorzugt eine im Wesentlichen längliche Form aufweisen, d. h. derart geformt sein, dass die Länge des Strömungskanals entlang der Längsseite des monolithischen Substrates verläuft und die Länge größer als die Breite und/oder Höhe des Strömungskanals ist. Es kann ebenfalls bevorzugt sein, dass der Strömungskanal eine gewundene Form aufweist. Bei einer gewundene Form des Strömungskanals führt das Fluid während seiner Strömung durch den Strömungskanal mindestens eine Wendung aus, d. h. einen Richtungswechsel während der Strömung durch den Strömungskanal. Mit anderen Worten ausgedrückt, kann es bevorzugt sein, dass der Strömungskanal einen oder mehrere Wendebereiche für das Fluid aufweist und durch einen mäanderförmigen Verlauf gekennzeichnet ist. Hierdurch lässt sich die Pfadlänge des Strömungskanals vorteilhaft um ein Vielfaches über die Länge des Substrates hinaus verlängern, beispielsweise um einen Faktor 2, 3, 4, 5, 10 oder mehr.

In einer weiteren bevorzugten Ausführungsform ist der Sensorchip dadurch gekennzeichnet, dass der Strömungskanal einen aufgeweiteten Abschnitt aufweist, wobei bevorzugt der aufgeweitete Abschnitt eine höhere Breite aufweist gegenüber weiteren Abschnitten des Strömungskanals. Analog zum verjüngten Abschnitt kann bevorzugt der aufgeweitete Abschnitt des Strömungskanals als derjenige Abschnitt gekennzeichnet werden, welcher eine höhere Breite als weitere Abschnitte des Strömungskanals aufweist, Insbesondere kann der Abschnitt, welcher die höchste Breite aufweist, als aufgeweiteter Abschnitt des Strömungskanals aufgefasst werden. Vorzugsweise weist ein aufgeweiteter Abschnitt eine Breite auf, welche um einen Faktor von mindestens 20 %, 50%, 100 %, 200 % oder mehr größer ist als eine Breite eines verjüngten Abschnittes.

Im Falle des Vorliegens eines aufgeweiteten und verjüngten Abschnitt des Strömungskanals wird der thermische Sensor bevorzugt über dem aufgeweiteten Abschnitt auf einer Vorderseite des Sensorchips aufgebracht.

Der Abschnitt des Strömungskanals unterhalb des thermischen Sensors kann mit einer Kavität von thermischen Strömungssensoren des Standes der Technik verglichen werden, die an Substraten als Träger des thermischen Sensors eingebracht werden, um eine thermische Isolation zu bewirken. Hierdurch soll insbesondere erreicht werden, dass das von einem Heizelement bereitgestellte Wärmefeld vorwiegend, vorzugsweise im Wesentlichen ausschließlich, durch das Fluid beeinflusst wird und eine Verfälschung von Messergebnissen durch eine Wärmeleitung durch das Substrat reduziert wird.

Im Stand der Technik wird hierzu vorzugsweise eine separate Kavität in einem Deckelwafer eingebracht, welche in Bezug auf einen Strömungskanal in einem unteren Bodenwafer ausgerichtet ist. Erfindungsgemäß ist durch die Integration des Strömungskanals in ein monolithisches Substrat dies nicht notwendig. Separate Strukturen oder Kavitäten müssen nicht eingebracht werden. Stattdessen wird eine Kavität unterhalb des thermischen Sensors direkt mitsamt der Bereitstellung des Strömungskanals durch eine bereichsweise Entfernung des Substrates vorzugsweise ausgehend von der Rückseite ermöglicht.

Sofern der Strömungssensor vorzugsweise keine größere Breite benötigt als jene minimale Breite des Strömungskanals, mit der ein fluidischer Widerstand eingestellt werden kann, kann es bevorzugt sein, den Strömungskanal mit einer konstanten (vorzugsweise geringen) Breite bereitzustellen. Falls dies nicht der Fall ist, kann durch einen entsprechend aufgeweiteten Abschnitt eine ausreichend große Kavität unterhalb des thermischen Sensors bereitgestellt werden.

Somit kann durch die Ausgestaltung des Verlaufs des Strömungskanals ein fluidischer Widerstand und damit eine Sensitivität des Sensorchips eingestellt werden. Besonders relevant ist für die Einstellung des Widerstandes innerhalb des Strömungskanals die Breite des Strömungskanals.

Für den hydraulischen Widerstand $R_{hyd}$ innerhalb eines Strömungskanals gilt unter der Voraussetzung, dass die Breite (w) des Strömungskanals deutlich kleiner ist als die Höhe (h) der Zusammenhang :

$$R_{hyd} = \Delta p / \Delta Q = 12*\eta*L / (w^3*h),$$

wobei ferner $\Delta p$ den Druckunterschied zwischen zwei Punkten innerhalb des Strömungskanals (beispielsweise einem Eintritts- und Austrittsbereich), $\Delta Q$ den Volumenstrom, $\eta$ die Viskosität des Fluides und L die Länge des Strömungskanals bezeichnet. Der hydraulischen Widerstand $R_{hyd}$ ist somit insbesondere von der Breite ($w^3$) abhängig, welche eine kubische Antiproportionalität aufweist im Gegensatz zu einer einfachen Proportionalität zur Höhe.

Für den Volumenstrom gilt der Zusammenhang $\Delta Q = \Delta v * A$, wobei A die Querschnittsfläche des Strömungskanals bezeichnet mit A = w * h.

Mithin lässt sich der Quotient aus Druckdifferenz und Strömungsgeschwindigkeit ($R_{strö} = \Delta p / \Delta v$), wie folgt berechnen:

$$R_{Strö} = R_{hyd} * A = 12*\eta*L / (w^3*h) * A = 12*\eta*L/w^2.$$

Erkennbar ist das Verhältnis aus Druckdifferenz und Strömungsgeschwindigkeit ($R_{strö} = \Delta p / \Delta v$) unabhängig von der Höhe des Kanals und umgekehrt proportional zum Quadrat der Breite ($w^2$) des Strömungskanals ist. Durch eine präzise Einstellung der Breite des Strömungskanals lässt sich somit eine besonders genaue Bestimmung des Druckdifferenz $\Delta p$ anhand einer Messung der Fließgeschwindigkeit $\Delta v$ im Strömungskanal erhalten.

Die Länge des Sensorchips meint bevorzugt die Dimensionierung entlang seiner Längsseite. Die Höhe und Breite des Sensorchips bezeichnen bevorzugt Dimensionen des Sensorchips, die untereinander orthogonal sind und auch jeweils senkrecht zur Länge des Sensorchips ausgerichtet sind. Die Höhe des Sensorchips kann bevorzugt auch als eine Dicke aufgefasst werden. Bevorzugt kann der Sensorchip eine Länge aufweisen von 200 - 10 000 $\mu m$, bevorzugt zwischen 500 - 5 000 $\mu m$, besonders bevorzugt von 800 - 2 000 $\mu m$. Die Höhe des Sensorchips beträgt bevorzugt 100 - 1 000 $\mu m$, bevorzugt 200 - 500 $\mu m$. Die Breite des Sensorchips beträgt bevorzugt 100 - 1 000 $\mu m$, bevorzugt 400 - 800 $\mu m$.

Vorzugsweise wird der Strömungskanal mindestens abschnittsweise durch eine Membran, die auf der Vorderseite des monolithischen Substrates angebracht ist, abgedeckt. Die Membran fungiert vorzugsweise mithin als eine obere Begrenzung des Strömungskanals.

Bevorzugt kann die Membran vollständig den Strömungskanal abdecken. Die Ausführungsform ist insbesondere bevorzugt, sofern die bereichsweise Entfernung des Substrates zur Bildung des Strömungskanals eine in der vertikalen Höhe vollständige Ätzung des Substrates meint, sodass ohne Aufbringung einer Membran als Abdeckschicht der Sensorkanal nach oben offen wäre.

Die Membran dient vorzugsweist jedoch nicht nur der Abdeckung des Strömungskanals von oben (und somit zur Medientrennung), sondern gleichzeitig als Träger für den thermische Sensor, welcher vorzugsweise auf der Membran aufgebracht vorliegt. Der Bereich der Membran, auf welcher der thermische Sensor vorliegt, kann auch als Sensorbereich oder Sensormembran bezeichnet werden, während Bereiche der Membran, welche außerhalb des Sensorbereiches vorwiegend einer Abdeckung dienen, auch als Deckschicht bezeichnet werden können. Mithin kann bevorzugte die Membran, insbesondere der Sensorbereich der Membran, als eine Zwischenkomponente aufgefasst werden, die zwischen dem thermischen Sensor und dem Strömungskanal vorliegt, insbesondere auch zwischen dem thermischen Sensor und dem Fluid, das innerhalb des Strömungskanals fließen kann.

In einer weiteren bevorzugten Ausführungsform ist der Sensorchip dadurch gekennzeichnet, dass eine Wand des Strömungskanals mit einer Schutzschicht beschichtet ist, wobei bevorzugt die Schutzschicht ein Material umfasst, ausgewählt aus einer Gruppe umfassend Polysilizium, Siliziumdioxid, Siliziumnitrid, Aluminiumoxid, Aluminiumnitrid, Perfluorodecyltrichlorsilan (FDTS), per- und/oder polyfluorierte Alkylverbildungen (PFAS) und/oder Parylene.

Die Wand des Strömungskanals meint bevorzugt Abschnitte des monolithischen Substrates, die den bereichsweise entfernten Bereich zur Bereitstellung des Strömungskanals ummanteln. Durch die Schutzschicht wird vorteilhaft ein Schutz des monolithischen Substrates ermöglicht werden, beispielsweise vor aggressiven Fluiden, welche das Substratmaterial bzw. die Wand des Strömungskanals durch unerwünschte chemische Reaktionen angreifen könnten. Beispielsweise kann durch die Schutzschicht ein Korrosionsschutz bewirkt werden. Ferner kann vorteilhaft auch eine Hydrophobisierung oder Hydrophilisierung erreicht werden, um die Strömung des Fluides durch den Strömungskanal effizienter zu gestalten. Die vorgenannten Materialien für die Schutzschicht haben sich bewährt, um je nach Anwendung gewünschte vorteilhafte Effekt zu erzielen und lassen sich zudem mit einfach Methoden auf die Wand des Strömungskanals beschichten.

Zur Messung des mindestens einen Strömungsparameters wird insbesondere ein thermischer Sensor eingesetzt, der ein Heizelement und eine Sensorkomponente umfasst. Wie obig ausgeführt, können verschiedene Betriebsmodi bzw. Messprinzipien dafür vorzugsweise umgesetzt werden.

Das Heizelement stellt dabei stets ein Wärmefeld bereit, dass durch die Strömung des Fluides innerhalb des Strömungskanals beeinflusst werden kann. Dieser Einfluss wird von der Temperaturantwort erfasst, welche von der Sensorkomponente aufgenommen wird.

In einer bevorzugten Ausführungsform ist der Sensorchip dadurch gekennzeichnet, dass das Heizelement ein elektrisches Heizelement ist, bevorzugt ein Heizwiderstand.

Das Heizelement bezeichnet bevorzugt die Komponente des thermischen Sensors, von der durch Abgabe einer Wärmeenergie das Wärmefeld bzw. der Wärmestrom ausgeht. Ein elektrisches Heizelement bezeichnet bevorzugt ein Heizelement, welches in der Lage ist, elektrische Energie in Wärmeenergie umzuwandeln, der im erfindungsgemäßen Kontext als Wärmefeld verwandt und zur Sensorkomponente, vorzugsweise dem Temperatursensor, übertragen wird. Die Wärmeenergie bzw. das Wärmefeld wird bei einem elektrischen Heizelement vorzugsweise derart erzeugt, dass ein elektrisch leitfähiges Material verwandt wird, welches von einem elektrischen Strom durchflossen und durch Joulesche Wärme erhitzt wird. Ein Heizwiderstand hat sich hierfür als besonders geeignet erwiesen, der insbesondere metallische Legierungen umfasst, die auch bei besonders hohen Temperaturen, die sie bereitstellen können, nicht schmelzen und/oder oxidieren.

In einer weiteren bevorzugten Ausführungsform ist der Sensorchip dadurch gekennzeichnet, dass die Sensorkomponente durch einen Temperatursensor gebildet wird, wobei bevorzugt der Temperatursensor ausgewählt ist aus einer Gruppe umfassend ein Thermoelement, eine Diode, ein Thermistor und/oder eine Thermosäule.

Der Temperatursensor ist bevorzugt eine Komponente des thermischen Sensors, der in der Lage ist, das Wärmefeld, insbesondere die Modulation des Wärmefeldes durch das Fluid, d. h. den Einfluss des Fluides auf das Wärmefeld, zu messen.

Ein Thermistor meint bevorzugt ein Bauelement umfassend einen elektrischen Widerstand, dessen Wert sich mit der Temperatur reproduzierbar ändert. Thermistoren unterteilen sich in ihren Temperaturverhalten in Heißleiter und Kaltleiter. Ein Heißleiter weist einen negativen Temperaturkoeffizienten auf und ist in der Lage, elektrischen Strom im heißen Zustand besser zu leiten als im kalten Zustand. Ein Kaltleiter weist einen positiven Temperaturkoeffizienten auf und kann im kalten Zustand besser elektrisch leiten als im heißen Zustand. Im Kontext der Erfindung kann vorzugsweise ein Heißleiter oder ein Kaltleiter als Thermistor verwandt werden. Mittels eines Thermistors lässt sich auf einfache und präzise Weise anhand eines sich ändernden elektrischen Widerstandes Rückschlüsse auf eine Modulation des Wärmefeldes und mithin mindestens ein Strömungsparameter des Fluides bestimmen.

Mit einem Thermoelement ist bevorzugt eine Anordnung umfassend ein Paar elektrisch leitfähiger Materialien gemeint, die an einem Ende miteinander verbunden sind und aufgrund des thermoelektrischen Effektes einen Rückschluss auf die gemessene Temperatur zulassen. Dabei wird elektrische Energie bei einer Temperaturdifferenz entlang der Anordnung bereitgestellt. Eine Thermosäule bezeichnet ein Element, welches mehrere Thermoelemente aufweist. Die Thermoelemente der Thermosäule sind bevorzugt elektrisch in Reihe und thermisch parallelgeschaltet.

Die Messstelle des Thermoelements oder der Thermosäule wird als Heißstelle, heißes Ende oder durch die englischen Begriffe *hot end* oder *hot junction* bezeichnet und bildet ein Ende eines Thermoelements. Das andere Ende, welches analog als Kaltstelle, kaltes Ende oder durch die englischen Begriffe *cold end* oder *cold junction* bezeichnet wird, bezeichnet eine als Referenz dienende Vergleichsstelle, um einen Temperaturunterschied feststellen zu können. Vorzugsweise wird eine elektronische Schaltung und/oder eine Recheneinheit zur Verarbeitung der Temperaturmessung mit der *cold junction* verbunden.

Auch eine Diode kann als Temperatursensor und damit als eine bevorzugte Sensorkomponente fungieren. Hierbei kann beispielsweise ausgenutzt werden, dass eine Durchlassspannung einer Diode sich mit der Temperatur im Wesentlichen linear ändert. Umso höher die Temperatur ist, desto geringer ist die Durchlassspannung und umgekehrt. Dementsprechend kann anhand der Änderung einer Durchlassspannung Rückschlüsse auf eine Änderung der Temperatur gezogen werden.

In einer weiteren bevorzugten Ausführungsform fungiert das Heizelement selbst als Sensorkomponente, d. h., dass vorzugsweise eine Sensorkomponente durch das Heizelement bereitgestellt werden kann, ohne dass ein Temperatursensor als Sensorkomponente eingesetzt wird. Die Wirkung des Heizelementes als Sensorkomponente kann beispielsweise wie die aus dem Stand der Technik bekannte 3-Omega-Methode ermöglicht werden. Bei der 3-omega-Methode wird eine thermische Eigenschaft, wie z. B. eine Wärmeleitfähigkeit, bestimmt. Dabei wird ein Heizelement selbst als Temperatursensor verwandt und mit einem oszillierenden Steuerungssignal eingespeist. Durch die eingespeiste Leistung ändert sich die Temperatur des Heizelementes mit der gleichen Frequenz des Ansteuerungssignals. Die Amplitude und die Phasenverschiebung gegenüber der Einspeiseleistung ist abhängig von der Wärmeleitfähigkeit und der Frequenz. Die Temperaturoszillationen führen zu einer Widerstandoszillationen des Heizelementes, welche unter anderem durch eine Widerstandamplitude beschrieben werden kann, die wiederrum abhängig von einem Temperaturkoeffizienten des elektrischen Widerstands des Heizelementes ist. Hieraus lässt sich durch eine Anwendung des ohmschen Gesetzes die Spannung über das Heizelement berechnen, welche eine Komponente mit der 3-fachen Frequenz ($3\omega$) und eine entsprechende Amplitude enthält, die proportional zur Temperaturamplitude des Heizelementes ist.

In einer weiteren bevorzugten Ausführungsform ist der Sensorchip dadurch gekennzeichnet, dass der Sensorchip eine Membran aufweist, auf welcher der thermische Sensor positioniert ist, wobei bevorzugt die Membran ein elektrisches leitfähiges Material und/oder ein dielektrisches Material umfasst, wobei bevorzugt das elektrisch leitfähige Material ausgewählt ist aus einer Gruppe umfassend einen Halbleiter und/oder ein Metall, insbesondere Silizium, Polysilizium, Graphen, Chalkogenid, wobei bevorzugt das dielektrische Material ausgewählt ist aus einer Gruppe umfassend Siliziumnitrid, Siliziumdioxid, Aluminiumoxid, Aluminiumnitrid, Polyimid und/oder ein polymeres Material.

Die Membran bezeichnet eine bevorzugte Komponente des Sensorchips, welche flächig ausgestaltet ist und bevorzugt auf der Vorderseite des monolithischen Substrates aufgebracht ist sowie mindestens abschnittsweise den Strömungskanal überdeckt. Die flächige Ausgestaltung der Membran meint bevorzugt, dass Maße wie eine Länge und/oder Breite um ein Vielfaches höher sind als eine dazu orthogonale Höhe bzw. Dicke der Membran. So kann die Länge und/oder Breite um einen Faktor 1,5, 2, 5, 10, 100, 1 000, 10 000 oder mehr höher sein als die Dicke. Vorzugsweise beträgt die Dicke der Membran zwischen ca. 0,1 - 20 $\mu$m, bevorzugt zwischen ca. 0,2 - 10 $\mu$m, besonders bevorzugt zwischen ca. 0,5 - 5$\mu$m, ganz besonders bevorzugt zwischen ca. 0,5 - 2 $\mu$m.

Wie obig erläutert, dient die Membran vorzugsweise sowohl als Träger für den thermischen Sensor (insbesondere in einem Sensorbereich der Membran) als auch als Abdeckung (sowohl im Sensorbereich, als auch in Bereichen außerhalb des Sensorbereich, in denen der Strömungskanals andernfalls nach zur Vorderseite offen wäre). Die bevorzugten Materialien der Membran eignen sich vorteilhafterweise für beide Funktion eigen.

Durch die bevorzugte Membran soll einerseits (insbesondere in einem Sensorbereich) eine thermische Isolation des durch das Heizelement bereitgestellten Wärmefeldes und eine Trägerfunktion für den thermischen Sensor erfüllt werden. Anderseits soll die Membran eine zuverlässige Medientrennung gewährleisten, in dem eine mindestens abschnittsweise Abdeckung, bevorzugt vollständige Abdeckung, des Strömungskanals erzielt wird.

Die bevorzugten Materialien für die Membran haben sich dahingehend als vorteilhaft erwiesen, dass sie neben der hervorragenden Ausgestaltungsmöglichkeit als Membran auch eine zuverlässige thermische Isolation bieten, sodass eine durch die Membran bedingte Wärmeleitung verringert oder vermieden wird. Hierdurch wird die Genauigkeit der Messergebnisse weiter verbessert, sodass im Wesentlichen der Einfluss des Fluides auf das Wärmefeld relevant bleibt. Ferner haben sich die bevorzugten Materialien hinsichtlich einer Verarbeitung zur Bereitstellung der Membran und einer hinreichenden mechanischen Stabilität als besonders vorteilhaft erwiesen.

Insbesondere ist die Membran zudem bevorzugt dazu ausgelegt eventuelle Schwingungen durch die Strömung des Fluides zu vermeiden, um Verfälschungen des Messergebnisses zu reduzieren.

Der Bereich der Membran, auf dem der thermische Sensor positioniert wird, umfasst bevorzugt ein dielektrisches Material. Ebenfalls kann bevorzugt die Membran ein elektrisch leitfähiges Material umfassen, sodass eine elektrische Kontaktierung zum thermischen Sensor besonders einfach bereitgestellt werden kann.

In bevorzugten Ausführungsform erstreckt sich die Membran oberhalb des Strömungskanals auf der Vorderseite des monolithischen Substrates. Hierbei wird durch die Membran eine Abdeckung des Strömungskanals erzielt, sodass das Fluid über die Vorderseite den Strömungskanal nicht verlassen kann und/oder über die Vorderseite von außen nichts in den Strömungskanal hineingelangen kann. Die Membran stellt somit eine obere Begrenzung des Strömungskanals dar.

Die Membran umfasst bevorzugt einen Sensorbereich, d. h. einen Bereich der Membran, auf dem der thermische Sensor angebracht ist, um die Messung des mindestens einen Strömungsparameters des Fluides vorzunehmen. Die Membran kann bevorzugt auch einen Abdeckbereich umfassen, d. h. einen Bereich, der im Wesentlichen der Abdeckung der weiteren Bereiche des Strömungskanal dient, die nicht durch den Sensorbereich abgedeckt werden. Dazu kann es bevorzugt sein, dass die Membran einschichtig oder mehrschichtig ausgebildet ist. Insbesondere kann die Membran mehrere Schichten von Materialien umfassend, die vertikal oder horizontal gebildet sind, um sowohl eine Trägerfunktion für thermischen Sensor als auch eine Abdeckfunktion für eine Überdeckung des Strömungskanals zu erfüllen.

Bevorzugt kann der Abdeckbereich das gleiche Material umfassen wie der Sensorbereich der Membran. Es kann auch bevorzugt sein, dass der Abdeckbereich und der Sensorbereich unterschiedliche Materialien umfassen. Es kann ebenfalls bevorzugt sein, dass der Abdeckbereich mehrere Materialien umfasst, beispielsweise Schichten, die vertikal aufeinander gestapelt sind, um eine für die Überdeckung des Strömungskanals besonders stabilen Bereich zu erhalten.

In einer weiteren bevorzugten Ausführungsform ist der Sensorchip dadurch gekennzeichnet, dass der Sensorchip eine elektronische Schaltung aufweist und/oder mit einer elektronischen Schaltung verbunden ist, wobei die elektronische Schaltung dazu konfiguriert ist, das Heizelement anzusteuern und/oder auf Basis der Temperaturantwort des thermischen Sensors den mindestens einen Strömungsparameter des Fluides zu ermitteln.

Im Sinne der Erfindung bezeichnet eine elektronische Schaltung vorzugsweise einen Zusammenschluss von elektrischen oder elektromechanischen Einzelelementen zu einer funktionsgerechten Anordnung. Vorzugsweise erlaubt die elektronische Schaltung Daten bzw. elektrische Signale zu senden, zu empfangen und/oder zu verarbeiten.

Bevorzugte elektronische Schaltungen umfassen ohne Beschränkung eine integrierte Schaltung (IC), anwendungsspezifische integrierte Schaltungen (ASIC), eine programmierbare logische Schaltung (PLD), ein Field Programmable Gate Array (FPGA), einen Mikroprozessor, einen Mikrocomputer, eine speicherprogrammierbare Steuerung und/oder eine sonstige elektronische, bevorzugt programmierbare, Schaltung.

Vorzugsweise ist die elektronische Schaltung dazu konfiguriert, Messdaten der Sensorkomponente zu empfangen und/oder Steuersignale, beispielsweise. Steuerbefehle, an das Heizelement zu geben, um das Wärmefeld zu erzeugen.

Vorzugsweise kann die elektronische Schaltung dazu eingerichtet sein, in Abhängigkeit der Messdaten der Sensorkomponente eine Regelung des Heizelementes vorzunehmen. Bevorzugt ist die elektronische Schaltung dazu konfiguriert, nach einer Messung der Sensorkomponente einen Befehl zur Erzeugung des Wärmefeldes an das Heizelement zu geben, beispielsweise um die Wärmeabgabe zu erhöhen, konstant zu halten oder zu verringern. Insbesondere kann es bevorzugt sein, dass die elektronische Schaltung einen oder mehrere der obig genannten Betriebsmodi ausführt, um auf Basis der Temperaturantwort durch den Einfluss der Strömung des Fluides auf das Wärmefeld mindestens einen Strömungsparameter zu messen.

In bevorzugten Ausführungsformen kann die elektronische Schaltung zudem dazu konfiguriert sein, die von der Sensorkomponente aufgenommenen Messdaten hinsichtlich der Modulation des Wärmefeldes zu verarbeiten. Das Verarbeiten von Daten meint bevorzugt, dass die elektronische Schaltung dazu konfiguriert ist, Rechenoperationen und/oder Rechenschritte vorzunehmen, beispielsweise mit aufgenommenen Messdaten der Sensorkomponente.

Die elektronische Schaltung kann somit als eine Auswerte-, Auslesungs- und/oder Ansteuerungselektronik vorliegen, welche eine Ansteuerung des Heizelementes, eine Auslesung der Sensorkomponente und/oder Auswertung der Messdaten ermöglicht. Sofern eine Auswertung vorgenommen wird, kann die elektronische Schaltung auch als Recheneinheit bezeichnet werden.

Der Begriff "Recheneinheit" bezieht sich vorzugsweise auf ein beliebiges Gerät oder eine beliebige Einheit, die dazu konfiguriert werden kann, Rechenoperationen durchzuführen.

Bevorzugt ist die Recheneinheit beispielsweise ein Prozessor, ein Prozessorchip, ein Mikroprozessor und/oder ein Mikrocontroller, das vorzugsweise dazu konfiguriert ist, eine Auswertung der Modulation des Wärmefeldes vorzunehmen. Die Recheneinheit kann auch bevorzugt eine programmierbare Leiterplatte sein. Die Recheneinheit kann auch vorzugsweise ein computerverwendbares oder computerlesbares Medium, wie eine Festplatte, einen Direktzugriffsspeicher (RAM), einen Festwertspeicher (ROM), einen Flash-Speicher usw. umfassen.

Verfahrensschritte zur Bestimmung des mindestens einen Strömungsparameters des Fluides, wie hierin beschrieben, werden vorzugsweise von der elektronischen Schaltung bzw. Recheneinheit durchgeführt. Die Formulierung "dazu konfiguriert ist" meint bevorzugt, dass auf der elektronischen Schaltung bzw. Recheneinheit ein Computercode und/oder eine Software installiert ist, um den Verfahrensschritt durchzuführen, beispielsweise um zu überprüfen, inwiefern eine Modulation des Wärmefeldes hervorgerufen wurde und welche Parameter des Fluides dafür maßgeblich waren. Der Computercode und/oder die Software zur Auswertung der Modulation des Wärmefeldes kann in einer beliebigen Programmiersprache oder einer modellbasierten Entwicklungsumgebung geschrieben sein, z. B. in C/C++, C#, Objective-C, Java, Basic/VisualBasic, MATLAB, Simulink, StateFlow, Lab View und/oder Assembler.

Der Computercode und/oder die Software, welche bevorzugt auf der elektronischen Schaltung oder Recheneinheit installiert ist, um insbesondere eine Auswertung der Modulation des Wärmefeldes vorzunehmen, kann als technisches Merkmale betrachtet werden, da eine direkte physische Wirkung des thermischen Sensors, beispielsweise die Zuführung eines Steuersignals für ein Heizelement oder die Erfassung einer Temperaturänderung durch die Sensorkomponente, genutzt wird. Funktionsbeschreibungen des Computercodes und/oder der Software können daher als bevorzugte und definierende Ausführungsformen der Erfindung angesehen werden.

Die elektronische Schaltung kann unterschiedlich positioniert werden, beispielsweise auf dem Sensorchip selbst. Es kann ebenfalls bevorzugt sein, dass sich die elektronische Schaltung auf einer Bodenplatte einer Strömungssensoranordnung befindet oder einer Hauptplatine befindet auf welcher die Strömungssensoranordnung. Vorzugsweise weist die elektronische Schaltung mit dem den Sensorchip, insbesondere dem thermische Sensor, eine Datenverbindung auf.

In einer weiteren bevorzugten Ausführungsform ist der Sensorchip dadurch gekennzeichnet, dass die Sensorkomponente mit einer Anschlussverbindung elektrisch verbunden ist.

Die Anschlussverbindung dient bevorzugt einer Datenverbindung, insbesondere einer elektrischen Verbindung zwischen einer bevorzugten elektronischen Schaltung und dem thermischen Sensor. Je nach Positionierung der elektronischen Schaltung beispielsweise auf einer Bodenplatte, welche als Leiterplatte ausgestaltet ist, oder einer separaten Hauptplatine, können unterschiedliche Ausführungsformen für eine Anschlussverbindung bereitgestellt werden.

In einer bevorzugten Ausführungsform ist die Anschlussverbindung ausgewählt ist aus einer Gruppe umfassend ein Anschlusspad, eine Leiterbahn, einen Leiterbahnstreifen, einen Bonddraht, eine Lötverbindung, einen elektrisch leitfähigen Klebstoff, einen Bump und/oder eine Durchkontaktierung.

Ein Anschlusspad umfasst bevorzugt ein elektrisch leitfähiges Material, welches auf einem räumlich eingeschränkten Abschnitt des Sensorchips aufgebracht wird, um eine elektrische Kontaktierung zu ermöglichen. Dabei kann bevorzugt eine Isolierschicht aufgebracht werden, die einen zu kontaktierenden Abschnitt derart begrenzt, dass ein freigelassener Bereich übrigbleibt. Der freigelassene Bereich kann darauf mit dem elektrisch leitfähigen Material gefüllt werden.

Leiterbahnen (auch Leitbahnen oder Leitungsbahnen genannt) bezeichnen bevorzugt elektrisch leitende Verbindungen mit zweidimensionalem Verlauf, das heißt entlang einer Ebene, die vorzugsweise auch als Leiterbahn- oder Metallisierungsebene bezeichnet werden können. Die Verbindung zwischen einzelnen Leiterbahnen kann vorzugsweise durch Durchkontaktierungen bereitgestellt werden. Damit keine Kurzschlüsse oder hohen Verlustströme auftreten, ist eine hohe elektrische Isolierung voneinander bevorzugt.

Leiterbahnstreifen bezeichnen bevorzugt aus einem leitfähigen Material gebildete Streifen. Die Streifen weisen bevorzugt eine höhere Länge als Breite auf. Sie dienen insbesondere der elektrischen Verbindung und können beispielsweise mittels Druckverfahren aufgebracht werden.

Bonddrähte bezeichnen eine elektrische Verbindungsmöglichkeit, die insbesondere dann verwandt werden, wenn Baukomponenten zuvor gebondet wurden. Bonddrähte zeichnen sich insbesondere dadurch aus, dass sie besonders dünn sind. Hierdurch wird eine einfache Kontaktierungsoption an Anschlusspins von Komponenten ermöglicht. Ein Bonddraht kann vorzugsweise einen Durchmesser von ca. 15 - 500 $\mu$m aufweisen, bevorzugt von 15 - 100 $\mu$m, besonders bevorzugt von 15 - 50 $\mu$m oder 100 - 500 $\mu$m. Ein Bonddraht kann ein Material umfassen ausgewählt aus einer Gruppe umfassend Gold, Aluminium, Kupfer, deren Verbindungen und/oder Legierungen.

Eine Lotverbindung meint bevorzugt eine elektrische Verbindung mittels eines lötfähigen Materials. Das lötfähige Material bezeichnet bevorzugt ein Material, welches nach der Aufbringung einer bestimmten Temperatur aufschmilzt, sodass durch den Schmelzvorgang eine Ausbreitung des Materials stattfinden und damit die Überdeckung und/oder Befüllung eines bestimmten Bereichs mit dem Material erfolgen kann. Ein bevorzugtes Lotmaterial kann ausgewählt sein aus einer Gruppe umfassend Silber, Kupfer, Zinn, Zink, deren Verbindungen und/oder Legierungen.

Ein elektrisch leitfähiger Klebstoff zeichnet sich bevorzugt dadurch aus, dass eine Erstarrung und damit eine feste elektrische Verbindung ohne die Einbringung von Druck und/oder Wärme bereitgestellt werden kann. Stattdessen findet eine Erstarrung des elektrisch leitfähigen Klebstoff nach einem bestimmten Zeitintervall statt. Ein elektrisch leitfähiger Klebstoff umfasst bevorzugt ein Klebemittel und einen elektrisch leitfähigen Füllstoff. Das Klebemittel kann bevorzugt ausgewählt sein aus einer Gruppe umfassend Epoxid(-harz), Silikon, Acryl und/oder Bismaleimid. Der elektrisch leitfähige Füllstoff kann bevorzugt ausgewählt sein aus einer Gruppe umfassend Gold, Nickel, Palladium, Platin und/oder Silber.

Ein Bump bezeichnet bevorzugt ein im Wesentlichen höckerförmiges Verbindungselement. Das Verbindungselement zeichnet insbesondere durch ihre höckerförmige Ausgestaltung aus. Sie kann durch elektrisch leitfähiges Material, insbesondere auch durch einen elektrisch leitfähigen Klebstoff und/oder ein Lotmaterial bereitgestellt werden. Vorzugsweise werden eine Mehrzahl an Bumps eingesetzt. Bumps können bevorzugt auf einer Unterseite des Sensorchips angebracht werden, um beispielsweise eine elektrische Kontaktierung mit mindestens einem Abschnitt einer Bodenplatte zu ermöglichen. Bumps können bevorzugt vorzugsweise durch Verfahren der Dünnfilmtechnik, galvanisch oder durch Schablonendruck aufgebracht werden.

Eine Durchkontaktierung bezeichnet bevorzugt eine im Wesentlichen vertikal verlaufende elektrische Verbindung. Mittels einer Durchkontaktierung können verschiedene Ebenen des Sensorchips miteinander elektrisch kontaktiert werden. Bevorzugt wird zur Bereitstellung einer Durchkontaktierung ein Bereich des monolithischen Substrats entfernt, beispielsweise in Form einer im Wesentlichen vertikal verlaufenden Kavität, und mit einem leitfähigen Material gefüllt, die sich vertikal, d. h. entlang der Höhe bzw. Dicke des monolithischen Substrates erstreckt.

Die genannten bevorzugten Optionen zur Bildung der Anschlussverbindung haben sich dahingehend als vorteilhaft erwiesen, dass sie zuverlässig und robust sind sowie von einem Fachmann einfach und mit bekannten Mitteln des Standes der Technik bereitgestellt werden können.

In einer weiteren bevorzugten Ausführungsform ist der Sensorchip dadurch gekennzeichnet, dass die Sensorkomponente mit einer Passivierungsschicht beschichtet ist, wobei bevorzugt die Passivierungsschicht ein Material umfasst, ausgewählt aus einer Gruppe umfassend Siliziumoxid, Siliziumnitrid und/oder Polyimid.

Die Passivierungsschicht bezeichnet bevorzugt eine Anordnung, welche eine oder mehrere Materialschichten umfassen kann. Die Passivierungsschicht ist bevorzugt auf dem thermischen Sensor beschichtet, um eine Passivierung zu bewirken. Die Passivierung betrifft hierbei insbesondere eine elektrische Isolierung von Komponenten des thermischen Sensors. Hierdurch wird vorteilhaft die Gefahr eines elektrischen Kurzschlusses vermieden oder verringert. Die genannten bevorzugten Materialien haben sich hierfür als besonders geeignet erwiesen.

In einer weiteren bevorzugten Ausführungsform ist der Sensorchip dadurch gekennzeichnet, dass das Substrat ein Halbleitermaterial umfasst, wobei bevorzugt das Halbleitermaterial ausgewählt ist aus einer Gruppe umfassend Monosilizium, Polysilizium, Siliziumcarbid, Siliziumgermanium, Germanium, Galliumarsenid und/oder Galliumnitrid.

Diese Materialien sind in der Halbleiter- und/oder Mikrosystemtechnik besonders einfach und kostengünstig zu bearbeiten und eignen sich ebenfalls gut für eine Massenherstellung. Ebenso sind diese Materialien für ein Dotieren und/oder ein Beschichten besonders gut geeignet, um in bestimmten Bereichen die gewünschten elektrischen, mechanischen, thermischen und/oder optischen Eigenschaften zu erzielen. Die vorgenannten Materialien bieten vielfältige Vorteile aufgrund der Verwendbarkeit standardisierter Herstellungstechniken, welche für die Integration von weiteren Komponenten, wie z. B. elektronischen Schaltungen, ebenfalls besonders geeignet sind.

In weiteren bevorzugten Ausführungsformen kann das Substrat auch Glas oder Keramik umfassen. Beide Materialien zeichnen sich ebenfalls durch eine gute Bearbeitbarkeit aus, wobei durch den Einsatz von Keramik insbesondere eine hohe Verschleißbeständigkeit erzielt werden kann, weist Glas vorteilhaft eine hohe chemische und thermische Beständigkeit mit einer gute elektrische Isolierfähigkeit sowie geringe optische Absorption paart.

In einem weiteren Aspekt betrifft die Erfindung ein Verfahren zur Herstellung eines Sensorchips gemäß dem obig Beschriebenen umfassend folgende Schritte:

a) Bereitstellung eines Substrates, welches eine Vorderseite und eine Rückseite aufweist und monolithisch ausgebildet ist,

b) bereichsweise Entfernung des Substrates, vorzugsweise ausgehend von der Rückseite, zur Anbringung eines Strömungskanals umfassend einen Eintrittsbereich und einen Austrittsbereich in dem Substrat,

c) Positionierung eines thermischen Sensors auf der Vorderseite.

Der durchschnittliche Fachmann erkennt, dass Erläuterungen, technische Merkmale, Definitionen und Vorteile des Sensorchips und von bevorzugten Ausführungsformen des Sensorchips auch für das Verfahren zur Herstellung des Sensorchips gelten, und umgekehrt.

Das Herstellungsverfahren hat sich als eine besonders prozesseffiziente Methode erwiesen, um den Sensorchip herzustellen, da eine Bereitstellung des Strömungskanals direkt innerhalb eines monolithischen Substrates erfolgen kann. Ein aufwendiger Aufbau eines Substratstacks zur Ausbildung eines Strömungskanals und/oder Kavität unterhalb eines thermischen Sensors, wie es beispielsweise aus dem Stand der Technik bekannt ist, ist nicht notwendig.

Insbesondere ist die Herstellung schnell und kostengünstig möglich. Die einfachere Möglichkeit zur Herstellung des Sensors resultiert u. a. daraus, dass für die Ausgestaltung des Strömungskanals darauf verzichtet werden kann, verschiedene Substrate miteinander zu verbinden oder weitere Komponenten auf einem oder mehreren Substraten anbringen zu müssen. Anstelle aufwendiger Verfahren wird der Strömungskanal vorteilhaft durch eine bereichsweise Entfernung innerhalb eines monolithischen Substrates gebildet, vorzugsweise ausgehend von der Rückseite. Dies kann im Wesentlichen in einem Prozessschritt erfolgen. Die Abmessung des Strömungskanals kann durch die Entfernung des Substrates entsprechend der gewünschten Anwendung besonders präzise erfolgen. Vorteilhaft ist somit eine massenhafte Herstellung des Sensorchips mit geringen Kosten und einem hohes Maß an Reproduzierbarkeit möglich.

Durch die Bildung des Strömungskanals unmittelbar innerhalb des monolithischen Substrates durch eine bereichsweise Entfernung ist zudem vorteilhaft insbesondere auch eine besonders feine Strukturierung mit hoher Präzision möglich. Durch die präzise Ausgestaltungsoption des Sensorchips, insbesondere des Strömungskanals, können vorteilhaft auch unerwünschte Turbulenzen vermieden werden, die innerhalb des Strömungskanals, insbesondere am Eintrittsbereich, eintreten und hierdurch die Messung durch den thermischen Sensor einschränken könnten. Insofern kann durch den Sensorchip auch ein hoher Grad an Sensitivität erlangt werden, sodass eine besonders genaue Messung des mindestens eines Strömungsparameters des Fluides ermöglicht wird.

Weiterhin lassen sich die fluidischen Eigenschaften des Strömungskanals vorteilhaft besonders präzise und konstant einstellen. Der fluidische Widerstand bzw. der Strömungswiderstand, der für den Kontext der Erfindung relevant ist, hängt insbesondere von der Breite des Strömungskanals ab, welche beispielsweise durch bekannte Ätzverfahren zur bereichsweisen Entfernung des Substrats äußerst präzise eingestellt werden können. Fehlertoleranzen, welche inhärent bei der Bildung von Strömungskanälen in zusammengesetzten Stacks aufgrund der Verbindungstechnik entstehen könnten, werden vermieden. Durch die Bildung des Strömungskanals innerhalb des monolithischen Stacks kann zudem gewährleistet werden, dass die Abmessungen des Strömungskanals sich konstant verhalten und insbesondere nicht von dem Fließverhalten des Fluides im Strömungskanal selbst beeinflusst werden.

Bevorzugt wird zunächst das Substrat bereitgestellt, welche eines Vorderseite und eine Rückseite aufweist sowie monolithisch ausgebildet ist. Nach der Bereitstellung des Substrates ist es bevorzugt, dass ausgehend eine bereichsweise Entfernung des Substrates erfolgt, vorzugsweise ausgehend von einer Rückseite erfolgt. Die bereichsweise Entfernung Substrates dient insbesondere der Bereitstellung des Strömungskanals, der einen Eintrittsbereich und einen Austrittsbereich für das Fluid umfasst. Bevorzugt erfolgt die bereichsweise Entfernung des Substrates durchgehend entlang der Höhe bzw. Dicke des Substrates, sodass die Höhe des Strömungskanals im Wesentlichen der Höhe des Substrates entspricht. Es kann ebenfalls bevorzugt sein, dass die bereichsweise Entfernung des Substrates derart erfolgt, dass eine Restdicke am Substrat übrigbleibt (beispielsweise bei einer Entfernung des Substrates ausgehend von einer Rückseite). Die Höhe der Strömungskanals entspricht in dem Fall im Wesentlichen der Höhe des Substrates abzüglich der Höhe der Restdicke.

Die bereichsweise Entfernung des Substrates zur Bereitstellung des Strömungskanals erfolgt bevorzugt mittels eines Ätzverfahrens. Vorzugsweise ist das Ätzverfahren ausgewählt aus einer Gruppe umfassend nasschemische Ätzverfahren und/oder Trockenätzverfahren, bevorzugt physikalische und/oder chemische Trockenätzverfahren, besonders bevorzugt durch reaktives Ionenätzen und/oder reaktives Ionentiefenätzen (DRIE, Bosch-Prozess).

Die vorgenannten bevorzugten Ätzverfahren sind dem Fachmann bekannt. In Abhängigkeit der gewünschten Ausgestaltung des Strömungskanals am Substrat Struktur können vorteilhafte Verfahren gewählt werden, um eine effiziente Durchführung zur Bildung des Strömungskanals zu gewährleisten. Darüber hinaus ist es mittels der Ätzverfahren vorteilhaft möglich die Abmessungen des Strömungskanals und mithin dessen fluidische Eigenschaften, wie beispielsweise dessen fluidischen Widerstand, besonders präzise einzustellen.

Auf der Vorderseite des monolithischen Substrates wird bevorzugt der thermische Sensor positioniert. Durch den thermischen Sensor kann auf Basis der Temperaturantwort mindestens ein Strömungsparameter des Fluides gemessen werden. Dabei verläuft der Strömungskanal unterhalb des thermischen Sensors in bzw. entlang des Substrates. Vorzugsweise wird vor der Positionierung des thermischen Sensors auf der Vorderseite des Substrates eine Membran angebracht. Vorzugsweise wird bei einer bevorzugten Aufbringung einer Membran der thermische Sensor darauf positioniert. Bevorzugt kann die Membran derart aufgebracht werden, dass sie den Strömungskanal vollständig abdeckt.

Zur Aufbringung des thermischen Sensors können bevorzugte Abscheide- bzw. Beschichtungsverfahren eingesetzt werden, um die Ausgestaltung der Komponenten, wie z. B. einen Temperatursensor, eine Sensorkomponente, elektrische Verbindungen etc. vorzunehmen.

In einem weiteren Aspekt betrifft die Erfindung eine Strömungssensoranordnung umfassend einen Sensorchip nach dem obig Beschriebenen und eine Bodenplatte, wobei die Bodenplatte mindestens eine Öffnung aufweist, welche mit dem Eintrittsbereich für einen Einlass des Fluides in den Strömungskanal und/oder dem Austrittsbereich für einen Auslass des Fluides aus dem Strömungskanal korrespondiert, wobei die Bodenplatte vorzugsweise zwei Öffnungen aufweist, welche mit dem Eintrittsbereich für einen Einlass des Fluides in den Strömungskanal und/oder dem Austrittsbereich für einen Auslass des Fluides aus dem Strömungskanal korrespondieren..

Der durchschnittliche Fachmann erkennt, dass Erläuterungen, technische Merkmale, Definitionen und Vorteile des Sensorchips und von bevorzugten Ausführungsformen des Sensorchips und vom Verfahren zur Herstellung des Sensorchips auch für die erfindungsgemäße Strömungssensoranordnung gelten, und umgekehrt.

Im Sinne der Erfindung bezeichnet eine Strömungssensoranordnung bevorzugt eine Vorrichtung, welche mindestens den Sensorchip und eine Bodenplatte umfasst. Die Bodenplatte bezeichnet bevorzugt eine Komponente, welche als Träger des Sensorchips fungiert, sodass der Sensorchip auf die Bodenplatte platziert werden kann. Die Strömungssensoranordnung kann in Vorzugsformen weiterhin auch eine Abdeckung, beispielsweise eine Kappe umfassen, welche mit der Bodenplatte derart verbunden ist, dass der Sensorchip innerhalb der gehäuseartigen Komponenten der Bodenplatte und Abdeckung eingeschlossen vorliegt. Eine Strömungssensoranordnung umfassend eine Bodenplatte und Abdeckung kann vorzugsweise mithin auch als ein Sensorpackage bezeichnet werden, einem Schutz des Sensorchips dient und dessen Integration in weitere Komponenten, wie beispielsweise einer Hauptplatine erleichtert.

Vorzugsweise wird die Rückseite des Substrates des Sensorchips auf der Bodenplatte angebracht. Die Bodenplatte umfasst mindestens eine, vorzugsweise zwei Öffnungen, wobei im letzteren Falle eine erste Öffnung mit dem Eintrittsbereich und eine zweite Öffnung mit dem Austrittsbereich des Strömungskanals korrespondiert. Die Korrespondenz meint hierbei bevorzugt, dass insbesondere eine fluidische Verbindung zwischen dem Eintrittsbereich und der ersten Öffnung sowie dem Austrittsbereich und der zweiten Öffnung der Bodenplatte vorliegt. Dabei kann es bevorzugt sein, dass der Sensorchip derart auf die Bodenplatte aufgebracht wird, sodass der Eintrittsbereich sich im Wesentlichen direkt oberhalb der ersten Öffnung der Bodenplatte und der Austrittsbereich sich im Wesentlichen direkt oberhalb der zweiten Öffnung der Bodenplatte befindet. Hierdurch kann dann eine Messung mittels der Strömungssensoranordnung derart erfolgen, das Fluid zunächst über die erste Öffnung der Bodenplatte und den Eintrittsbereich entlang des Strömungskanals strömt und die Strömungssensoranordnung nach einer Strömung durch den Austrittsbereich und der zweiten Öffnung der Bodenplatte verlässt.

Es kann jedoch auch bevorzugt sein, dass die Bodenplatte lediglich eine Öffnung bereitstellt, welche mit einem Eintrittsbereich (oder Austrittsbereich) des Strömungskanals korrespondiert, wobei einer weitere Öffnung auf der Vorderseite des Sensorchips, beispielsweise als Öffnung innerhalb einer Membran, mit dem Austrittsbereich (oder Eintrittsbereich) des Strömungskanals korrespondiert. Der Eintritts- oder Austrittsbereich des Strömungskanals wird in dem Fall vorzugsweise nicht auf einer Rückseite des Substrates gebildet wird, sondern vorderseitig, beispielsweise durch die Bereitstellung eines Öffnung in einer vorderseitigen Membran, welche den Strömungskanal nach oben begrenzt.

In einer weiteren bevorzugten Ausführungsform ist die Strömungssensoranordnung dadurch gekennzeichnet, dass die Bodenplatte mindestens an einer dem Sensorchip zugewandten Seite eben ausgestaltet ist und eine untere Begrenzung des Strömungskanals bildet.

Eine untere Begrenzung des Strömungskanals meint bevorzugt, dass durch die Bodenplatte eine Abdeckung des Strömungskanals ausgehend von der Rückseite ermöglicht wird. Die Bodenplatte stellt mithin bevorzugt eine untere Wand des Strömungskanals dar. Während der Strömungskanal, wie obig erläutert, vorzugsweise seitlich von dem Substrat ummantelt wird, wird der Strömungskanals vorzugsweise von oben durch eine Membran begrenzt und von unten (außer in den Bereichen des Eintritts- und/oder Austrittsbereiches) durch die Bodenplatte.

Durch die mindestens eine Öffnungen, vorzugsweise zwei Öffnungen, an der Bodenplatte wird ein Eintritt des Fluides in den Strömungskanal über den Eintrittsbereich und ein Verlassen des Strömungskanals über den Austrittsbereich gewährleistet.

Eine im Wesentlichen ebene Ausgestaltung der Bodenplatte mindestens an einer dem Sensorchip zugewandten Seite meint bevorzugt, dass an der dem Sensorchip zugewandten Seite die Bodenplatte keine Unebenheiten, Erhöhungen oder Vertiefungen aufweist, sondern vorzugsweise im Wesentlich glatt ist, um eine glatte untere Begrenzung des Strömungskanals bereitzustellen. Die vom dem Sensorchip abgewandte Seite der Bodenplatte kann derartige Unebenheiten aufweisen. Vorzugsweise weist die Bodenplatte jedoch insgesamte eine flache ebene Ausgestaltung auf, bei der die Bodenplatte im Wesentlichen ein konstante Höhe bzw. Dicke aufweist. Die Höhe bzw. Dicke ist dabei vorzugsweise um ein Vielfaches, bevorzugt um einen Faktor 2, 3, 4, 5, 10 oder mehr geringer als eine Länge und/oder Breite der Bodenplatte.

Bevorzugt weist die Bodenplatte einen im Wesentlichen einheitlichen, flachen geometrischen Verlauf und bis auf die zwei Öffnungen keine weiteren geometrischen Strukturierungen auf. Eine im Wesentlichen flache Ausgestaltung der Bodenplatte hat sich für eine passgenaue Verbindung zwischen Sensorchip und Bodenplatte als vorteilhaft erwiesen.

Bevorzugt wird zwischen der Rückseite des Substrates und der dem Substrat zugewandten Seite der Bodenplatte ein Verbindungsmittel aufgebracht, beispielsweise auf der Bodenplatte selbst oder auf der Rückseite des Substrates, wodurch der Sensorchip mit der Bodenplatte verbunden werden kann. Hierbei kann es passieren, dass ein Teil des Verbindungsmittels, das beispielsweise als Klebstoff vorliegen kann, in den Strömungskanals eindringt. Demzufolge entspräche die Höhe des Strömungskanals der Höhe des monolithischen Substrates abzüglich der Höhe des eingedrungenen Verbindungsmittels. Bevorzugt ist es jedoch, dass die Höhe des Strömungskanals im Wesentlichen der Höhe des monolithischen Substrates entspricht. Insbesondere ist es bevorzugt, dass ein Verbindungsmittel im Wesentlichen nicht oder nur geringfügig in den Strömungskanal hineingelangt.

In einer weiteren bevorzugten Ausführungsform ist die Strömungssensoranordnung dadurch gekennzeichnet, dass die Bodenplatte ein Schaltungsträger, vorzugweise eine Leiterplatte ist.

Ein Schaltungsträger bezeichnet bevorzugt ein Bauelement umfassend ein elektrisch isolierendes Material, auf dem elektrisch leitende Verbindungen (Leiterbahnen) und/oder elektronische Bauelemente bzw. Baugruppen vorliegen. Ein Schaltungsträger bezeichnet mithin vorzugsweise einen Träger für elektronische Bauteile oder elektrisch leitende Verbindungen, der sowohl der mechanischen Befestigung als auch der elektrischen Verbindung dient. Da auf oder in dem Schaltungsträger bevorzugt elektronische vorliegen, liegen insbesondere elektrische Verbindungen auf oder in dem Schaltungsträger vor, die beispielsweise durch Drahtbonds Leiterbahnen und/oder Leiterbahnstreifen vermittelt werden. Mithin fungiert der Schaltungsträger sowohl als mechanischer Träger als auch für eine elektrische Verbindung zur Realisierung von elektrischen Funktionen. Die elektrischen Verbindungen des Schaltungsträgers dienen insbesondere der elektrischen Kontaktierung von Komponenten. Das isolierende Material des Schaltungsträgers gibt bevorzugt eine Grundform des Schaltungsträgers vor, insbesondere um einen mechanischen Kontakt mit dem Sensorchip vorzugeben.

Bevorzugt wird als Schaltungsträger eine Leiterplatte eingesetzt. Eine Leiterplatte bezeichnet bevorzugt die in der Fachwelt bekannte flach ausgestaltete Art eines Schaltungsträgers, der elektrische Verbindungen umfasst und eine mechanische Stütze für oberflächenmontierte und/oder gesockelte Komponenten bietet. Vorzugsweise umfasst eine Leiterplatte als isolierendes material Fiberglas, ein Epoxid und/oder einen anderen Verbundwerkstoff. Eine Leiterplatte ist dahingehend vorteilhaft, dass besonders einfach die beiden Öffnungen bereitgestellt werden können, die mit dem Eintrittsbereich und dem Austrittsbereich des Strömungskanals am Sensorchip korrespondieren. Ferner zeichnen sie sich durch eine hohe Stabilität aus, sodass auch die Messung von Strömungen mit einem hohen hydrodynamischen Druck mittels der Strömungssensoranordnung weiterhin genau und zuverlässig vorgenommen werden können, ohne einem Risiko evtl. mechanischer Verformungen durch das Fluid und damit einer Verfälschung von Messergebnissen ausgesetzt sein zu müssen.

Vorzugsweise liegt auf dem Schaltungsträger, vorzugsweise der Leiterplatte, die mindestens eine elektronische Schaltung vor, welche mit dem thermischen Sensor, vorzugsweise über einen Anschlussverbindung, elektrisch verbunden ist. Die Bodenplatte in Form einer Leiterplatte erlaubt somit nicht nur einen fluidischen Anschluss des Sensorchips an einen Kanal oder Behälter als eine fluidische Anschlussverbindung, dessen Fluidinhalt auszumessen ist, sondern kann gleichzeitig eine Steuer- und oder Auswertelektronik bereitstellen.

Ebenso kann es bevorzugt sein, dass die Bodenplatte, vorzugsweise als Leiterplatte, über weitere Anschlüsse, beispielsweise ein Lotmaterial, mit einer Hauptplatine verbunden vorliegt, auf welcher sich die elektronische Schaltung befindet. Es kann bevorzugt sein, dass die Verbindung zwischen der Bodenplatte und der Hauptplatine mittels eines Dichtringes, insbesondere eines Lötringes, erfolgt. Vorzugsweise kann der Löting einem weiteren Anschluss verbunden sein, um eine elektrische und mechanische Verbindung zwischen einer Strömungssensoranordnung, die den Sensorchip und die Bodenplatte umfasst, ermöglicht werden. Dabei weist die Hauptplatine Hauptplatinenöffnungen auf, welche mit den Öffnungen der Bodenplatte korrespondieren. Die elektronische Schaltung ist auf der Hauptplatine aufgebracht, sodass eine Datenverbindung zwischen dem thermischen Sensor des Chips und der elektronischen Schaltung gegeben ist.

Weiterhin betrifft die Erfindung eine Verwendung eines Sensorchips oder einer Strömungssensoranordnung nach dem obig Beschriebenen zur Messung eines Strömungsparameters eines Fluides in einem Hauptkanal in einer Bypass-Konfiguration.

Der durchschnittliche Fachmann erkennt, dass Erläuterungen, technische Merkmale, Definitionen und Vorteile des Sensorchips, des Verfahrens zur Herstellung des Sensorchips sowie einer Strömungssensoranordnung umfassend einen Sensorchip sowie bevorzugten Ausführungsformen der Vorgenannten auch für die Verwendung des Sensorchips oder der Strömungssensoranordnung gelten, und umgekehrt.

Eine Bypass-Konfiguration bezeichnet bevorzugt die Anbringung eines Seitenkanals (oder Bypass) zu einem Hauptkanal, in welchem das zu vermessende Fluid hineinströmen kann. Im erfindungsgemäßen Kontext bildet der Strömungskanals des Sensorchips den Bypass oder einen Teilabschnitt davon. Ein Hauptkanal in Kombination mit einem erfindungsgemäßen Sensorchip oder einer Strömungssensoranordnung, deren Strömungskanal den Bypass oder einen Teilabschnitt davon bildet wird erfindungsgemäßen Kontext auch als Bypass-Konfiguration bezeichnet.

Bei einer Bypass-Konfiguration strömt das zu detektierende bzw. das auszumessende Fluid innerhalb des Hauptkanals. Der Bypass ist mit dem Hauptkanal fluidisch verbunden, sodass eine Einleitung des Fluides vom Hauptkanal in den Bypass und eine Rückführung des Fluides vom Bypass zurück in den Hauptkanal ermöglicht werden kann. Ferner liegt bevorzugt bei einer Bypass-Konfiguration ein Durchflussbegrenzer innerhalb des Hauptkanals vor. Der Durchflussbegrenzer bewirkt, dass ein Druckabfall, insbesondere ein Druckunterschied vorliegt, insbesondere in einem Bereich des Hauptkanals am Eintrittsbereich des Sensorchips und an einem Bereich des Hauptkanals am Austrittsbereich des Sensorchips. Durch den Druckunterschied kann das Fluid in Bypass gelangen. Dabei strömt das Fluid vom Hauptkanal in den Bypass und vom Bypass in den Hauptkanal zurück.

Die Verwendung des obig beschriebenen Sensorchips oder der obig beschriebenen Strömungssensoranordnung eignet sich vorteilhafterweise besonders gut, um in einer Bypass-Konfiguration eingesetzt werden und mindestens einen Strömungsparameter des Fluides zu messen. Vorteilhaft kann durch die Verwendung des Sensorchips oder der Strömungssensoranordnung eine akkurate, robuste, stabile und kostensensitive Messung des mindestens einen Strömungsparameters des Fluides ausgeführt werden. Dabei ist es bevorzugt, dass der Sensorchip oder die Strömungssensoranordnung in oder an dem Bypass eingebracht wird. Mit anderen Worten ausgedrückt, wird bevorzugt der Sensorchip oder die Strömungssensoranordnung in dem Bypass eingebracht, sodass die eigentliche Messung des mindestens einen Strömungsparameters innerhalb des Bypass stattfindet.

In einer weiteren bevorzugten Ausführungsform ist die Verwendung dadurch gekennzeichnet, dass in dem Hauptkanal ein Durchflussbegrenzer eingebracht vorliegt, wobei eine fluidische Verbindung zwischen Sensorchip und Hauptkanal derart bereitgestellt wird, dass der Eintrittsbereich des Sensorchips an einen Bereich des Hauptkanals stromaufwärts des Durchflussbegrenzers angrenzt, während der Austrittsbereich des Sensorchips an einen Bereich des Hauptkanals stromabwärts des Durchflussbegrenzers angrenzt, sodass eine Druckdifferenz über den Durchflussbegrenzer anhand einer Strömung des Fluides durch den Strömungskanals des Sensorchips messbar ist.

Ein Durchflussbegrenzer bezeichnet bevorzugt eine Komponente, die in dem Hauptkanal eingebracht vorliegt und der Drosselung der Strömung dient. Anders ausgedrückt, kann der Fluss des Fluides durch einen Durchflussbegrenzer reguliert werden. Ein Durchflussbegrenzer nimmt einen Bereich des Hauptkanals ein, sodass eine durchströmende Fläche des Hauptkanals eingegrenzt wird. Der Durchflussbegrenzer bewirkt einen Druckabfall, sodass ein Druckunterschied, insbesondere zwischen einem Bereich des Hauptkanals am Eintrittsbereich des Sensorchips (stromaufwärts des Durchflussbegrenzers) und an einem Bereich des Hauptkanals am Austrittsbereich des Sensorchips (stromabwärts des Durchflussbegrenzers). Durch den Druckunterschied gelangt kann das Fluid vom Hauptkanal in den Bypass und zurück zum Hauptkanal, wobei die Höhe des Druckunterschiedes eine Fließgeschwindigkeit durch den Bypass vorgibt.

Durch den Durchflussbegrenzer wird innerhalb des Hauptkanals ein Strömungswiderstand erhöht, wodurch ein Druckunterschied resultiert. Dies kann, ohne auf die Theorie beschränkt zu sein, sich durch zwei Effekte ergeben. Einerseits führt die Reibung zwischen dem Fluid und den Oberflächen des Durchflussbegrenzers (Oberflächen parallel zur Strömung) zu einem Druckabfall, der im Wesentlichen linear mit der Strömung zunimmt. Andererseits erzeugen die Endflächen und ihre Kanten Turbulenzen und damit einen Druckabfall, der im Wesentlichen quadratisch mit der Strömung zunimmt. Eine Druck-/Durchflusskennlinie umfasst daher bevorzugt eine Kombination aus linearen und quadratischen Komponenten.

Ein Durchflussbegrenzer kann bevorzugt ausgewählt sein aus einer Gruppe umfassend eine Messblende (Strömungsblende) und/oder eine Venturi-Düse. Es kann ebenfalls bevorzugt sein, dass der Durchflussbegrenzer eine Wabenstruktur oder eine Schaufelstruktur umfasst. Bevorzugt umfasst der Durchflussbegrenzer eine möglichst hohe Fläche, die parallel zur Strömungsrichtung innerhalb des Hauptkanals gerichtet ist, und eine möglichst geringen Querschnitt dazu.

Durch den Bypass wird insbesondere eine fluidische Verbindung zwischen Sensorchip und Hauptkanal derart bereitgestellt wird, dass der Eintrittsbereich des Sensorchips an einen Bereich des Hauptkanals stromaufwärts des Durchflussbegrenzers angrenzt. Der der Austrittsbereich des Sensorchips grenzt wiederrum an einen Bereich des Hauptkanals an, der stromabwärts des Durchflussbegrenzers angrenzt. Stromaufwärts und Stromabwärts sind hierbei bevorzugt in Bezug auf die Richtung der Fluidströmung im Hauptkanal bezogen. Eine Postionierung des Eintrittsbereich stromaufwärts meint, dass der Eintrittsbereich sich in Richtung der Fluidströmung vor dem Durchflussbegrenzers, während sich der Austrittsbereich in Richtung der Fluidströmung im Hauptkanal hinter dem Durchflussbegrenzers. Die Druckdifferenz über bzw. entlang des Durchflussbegrenzers im Hauptkanal ist somit durch den Sensorchip innerhalb des Bypass messbar.

Vom Hauptkanal gelangt das Fluid in den Bypass. Dies ergibt sich insbesondere dadurch, dass im Bereich des Eintrittsbereich am Hauptkanal ein höher Druck vorliegt als im Bereich des Austrittsbereiches. Dieser Druckunterschied resultiert durch den Durchflussbegrenzer im Hauptkanal und ist abhängig vom Fließverhalten des Fluides im Hauptkanal, wie beispielsweise der Strömungsgeschwindigkeit.

Innerhalb des Bypass kann durch den Sensorchip, insbesondere durch den thermische Sensor, der Einfluss des Fluides auf das Wärmefeld über die Temperaturantwort erkannt werden. Dabei kann beispielsweise das Strömungsverhalten innerhalb des Strömungskanals des Fluides festgestellt werden.

Die Temperaturantwort ist beispielsweise sensitiv gegenüber der Strömungsgeschwindigkeit im Strömungskanal. Da die Strömungsgeschwindigkeit im Bypass unmittelbar mit der strömungsabhängigen Druckdifferenz im Hauptkanal zusammenhängt, erlaubt dies einen Aufschluss über die Strömung im Hauptkanal. Ebenfalls können durch den thermischen Sensor weitere Eigenschaften bzw. Strömungsparameter des Fluides wie beispielsweise einer Wärmekapazität und/oder Wärmleitfähigkeit erhalten werden. Hierdurch wird somit nicht nur eine Überwachung des Strömungsverhaltens des Fluides des Hauptkanals, sondern auch dessen Zusammensetzung ermöglicht.

Des Weiteren betrifft die Erfindung ein System umfassend

    a. einen Sensorchip nach dem obig Beschriebenen oder eine Strömungssensoranordnung nach dem obig Beschriebenen und

    b. einen Hauptkanal, durch den ein Fluid strömbar geführt werden kann,

wobei in dem Hauptkanal ein Durchflussbegrenzer eingebracht vorliegt und wobei eine fluidische Verbindung zwischen Sensorchip und Hauptkanal derart bereitgestellt vorliegt, dass der Eintrittsbereich des Sensorchips an einen Bereich des Hauptkanals stromaufwärts des Durchflussbegrenzers angrenzt, während der Austrittsbereich des Sensorchips an einen Bereich des Hauptkanals stromabwärts des Durchflussbegrenzers angrenzt, sodass eine Druckdifferenz über den Durchflussbegrenzer anhand einer Strömung des Fluides durch den Strömungskanals des Sensorchips messbar ist.

Der durchschnittliche Fachmann erkennt, dass Erläuterungen, technische Merkmale, Definitionen und Vorteile des Sensorchips, des Verfahrens zur Herstellung desselben, der Strömungssensoranordnung auch für das System gelten, und umgekehrt.

Durch den Hauptkanal strömt das Fluid, welches mittels des Sensorchips oder der Strömungssensoranordnung erfasst werden soll, insbesondere dessen mindestens einer Parameter gemessen werden soll. In dem Hauptkanal liegt bevorzugt mindestens ein Durchflussbegrenzer vor, vorzugsweise auch mehrere Durchflussbegrenzer. Durch den Durchflussbegrenzer tritts insbesondere ein Druckunterschied im Bereich um den Durchflussbegrenzer auf, insbesondere zwischen einem Bereich dem Hauptkanals, der zum Eintrittsbereich angrenzt und einem Bereich des Hauptkanals, der zum Austrittsbereich angrenzt. Insbesondere liegt durch den Durchflussbegrenzer in dem Bereich des Eintrittsbereiches ein höherer Druck vor als in dem Bereich des Hauptkanals, der zum Austrittsbereich angrenzt. Hierdurch kann das Fluid in Richtung des Sensorchips oder der Strömungssensoranordnung strömen, um ausgemessen zu werden. Das System kann insbesondere durch eine Bypass-Konfiguration bereitgestellt werden, bei der Strömungskanals des Sensorchips den Bypass oder einen Teilabschnitt davon bildet.

Die erfindungsgemäßen Aspekte sollen im Folgenden anhand von Figuren beispielhaft beschrieben werden, ohne auf diese Beschreibungen beschränkt zu sein.

**Figuren**

Kurzbeschreibung der Figuren

**Fig. 1** Schematische Darstellung einer bevorzugten Ausführungsform des Sensorchips.

**Fig. 2** Schematische Darstellung einer bevorzugt Ausführungsform einer Strömungssensoranordnung.

**Fig. 3** Schematische Darstellung eines erfindungsgemäßen Systems.

**Fig. 4** Schematische Darstellung einer bevorzugten Ausführungsform einer Strömungssensoranordnung auf einer Hauptplatine.

Detaillierte Beschreibung der Figuren

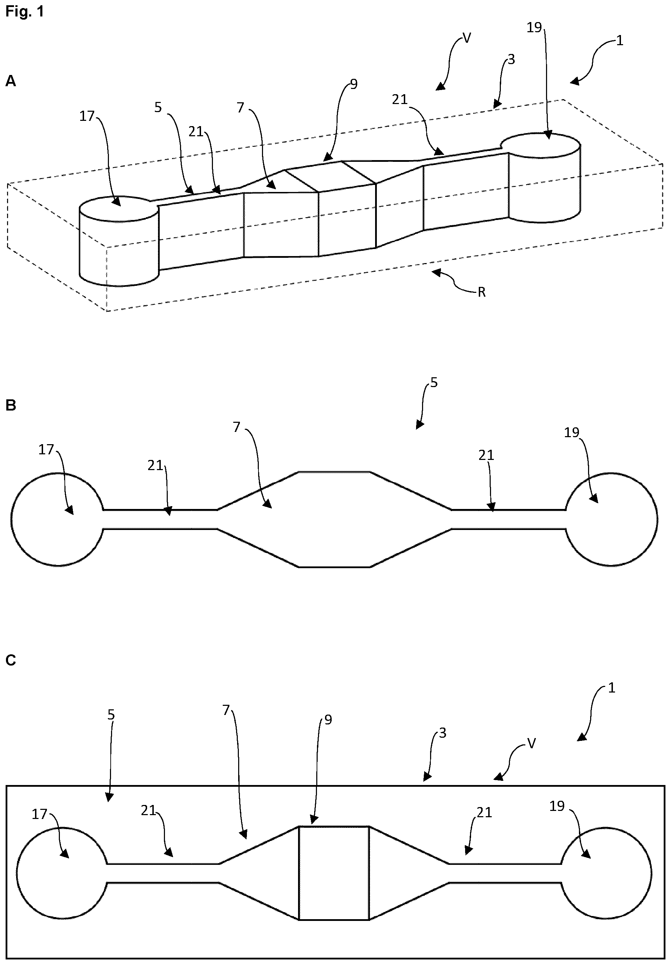

Fig. 1 A-C zeigt verschiedene Ansichten einer bevorzugten Ausführungsform eines Sensorchips **1** und eines Strömungskanals **5**. Fig. 1A ist eine dreidimensionale Darstellung des Sensorchips **1**. Fig 1B ist eine Draufsicht des Strömungskanals **5** und Fig. 1C stellt eine Draufsicht auf den Sensorchip **1** dar.

Der Sensorchip **1** dient der Messung mindestens eines Strömungsparameters eines Fluides. Der Sensorchip **1** umfasst ein Substrat **3** mit einer Vorderseite **V** und einer Rückseite **R**. Weiterhin umfasst der Sensorchip **1** einen thermischen Sensor **9** umfassend ein Heizelement zur Bereitstellung eines Wärmefeldes und eine Sensorkomponente zur Erfassung einer Temperaturantwort des thermischen Sensors in Abhängigkeit eines Einflusses des Fluides auf das Wärmefeld. Das Substrat **3** ist monolithisch ausgebildet. Des Weiteren liegt der thermische Sensor auf der Vorderseite **V** des Substrates **3** positioniert vor. Unterhalb des thermischen Sensors innerhalb des Substrates **3** liegt ein Strömungskanal **5** vor. Der Strömungskanal **5** ist ausgehend von einer Rückseite **R** durch eine bereichsweise Entfernung des Substrates **3** gebildet worden. Der Strömungskanal **5** weist einen Eintrittsbereich **17** für einen Einlass des Fluides in den Strömungskanal **5** und einen Austrittsbereich **19** für einen Auslass des Fluides aus dem Strömungskanal **5** auf. Auf Basis der Temperaturantwort des thermischen Sensors **9** ist der mindestens eine Strömungsparameter des Fluides messbar.

Vorteilhafterweise zeichnet sich der Sensorchip **1** durch ein hohes Maß an Kompaktheit aus. Insbesondere werden keine Mehrzahl an Substraten oder aufwendige Strukturen benötigt, um einen Strömungskanal **5** bereitzustellen, durch den das Fluid strömen kann. Stattdessen liegt der Strömungskanal **5** des Sensorchips **1** in einem einzelnen, monolithischen Substrat **3** vor. Dies stellt eine wesentliche Abkehr zum Stand der Technik dar, erhöht die Robustheit und vereinfacht dessen Herstellung. Weiterhin weist der Sensorchip **1** vorteilhaft eine geringe Höhe auf, welche im Wesentlichen der Höhe des Substrates bzw. eines darin gebildeten Strömungskanals **5** entspricht. Mithin ist eine einfache Integrationsmöglichkeit, beispielsweise in einer Bodenplatte, des Sensorchips **1** gegeben, sodass der Sensorchip 1 für vielseitige Anwendungszwecke zur Messung von Strömungen genutzt werden kann.

Ein weiterer Vorteil des Sensorchips **1** ist, dass dieser mit einfachen und bewährten Verfahren der Halbleitertechnik und/oder der Mikrosystemtechnik hergestellt werden kann. Insbesondere ist die Herstellung schnell und kostengünstig möglich. Die einfachere Möglichkeit zur Herstellung des Sensorchips **1** resultiert u. a. daraus, dass für die Ausgestaltung des Strömungskanals **5** darauf verzichtet werden kann, verschiedene Substrate miteinander zu verbinden oder weitere Komponenten auf einem oder mehreren Substraten anbringen zu müssen. Anstelle aufwendiger Verfahren wird der Strömungskanal **5** durch eine bereichsweise Entfernung innerhalb eines monolithischen Substrates **3** gebildet, vorzugsweise ausgehend von der Rückseite **R.** Dies kann im Wesentlichen in einem Prozessschritt erfolgen. Die Abmessung des Strömungskanals **5** kann durch die Entfernung des Substrates **3** entsprechend der gewünschten Anwendung besonders präzise erfolgen. Vorteilhaft ist somit eine massenhafte Herstellung des Sensorchips **1** mit geringen Kosten und einem hohes Maß an Reproduzierbarkeit möglich.

Durch die Bildung des Strömungskanals **5** unmittelbar innerhalb des monolithischen Substrates **3** durch eine bereichsweise Entfernung ist vorteilhaft insbesondere auch eine besonders feine Strukturierung mit hoher Präzision möglich. Durch die präzise Ausgestaltungsoption des Sensorchips **1,** insbesondere des Strömungskanals **5,** können vorteilhaft auch unerwünschte Turbulenzen vermieden werden, die innerhalb des Strömungskanals **5,** insbesondere am Eintrittsbereich **17,** eintreten und hierdurch die Messung durch den thermischen Sensor einschränken könnten. Insofern kann durch den Sensorchip **1** auch ein hoher Grad an Sensitivität erlangt werden, sodass eine besonders genaue Messung des mindestens eines Strömungsparameters des Fluides ermöglicht wird.

Weiterhin lassen sich die fluidischen Eigenschaften des Strömungskanals **5** vorteilhaft besonders präzise und konstant einstellen. So hängt der fluidische Widerstand des Strömungskanals, insbesondere von dessen Breite ab, welche beispielsweise durch bekannte Ätzverfahren zur bereichsweisen Entfernung des Substrats **3** äußerst präzise eingestellt werden können. Fehlertoleranzen, welche inhärent bei der Bildung von Strömungskanälen in zusammengesetzten Stacks aufgrund der Verbindungstechnik entstehen könnten, werden vermieden. Durch die Bildung des Strömungskanals **5** innerhalb des monolithischen Substrats **3** kann zudem gewährleistet werden, dass die Abmessungen des Strömungskanals **5** sich konstant verhalten und insbesondere nicht von dem Fließverhalten des Fluides im Strömungskanal **5** selbst beeinflusst werden.

Die Möglichkeit einer besonders präzisen Vorgabe eines fluidischen Widerstands des Strömungskanals **5,** welcher während der Messungen konstant gehalten werden kann, führt dazu, dass sich der Sensorchip **1** auf besondere Weise für Messungen von Strömungen eines Fluides in einer sogenannten Bypass-Konfiguration eignet.

Der Strömungskanal **5** weist in Fig. 1 einen verjüngten Abschnitt **21** auf. Der Abschnitt des Strömungskanals **5** mit der kleinsten Breite wird hierbei als verjüngter Abschnitt **21** bezeichnet. Weiterhin weist der Strömungskanal **5** einen aufgeweiteten Abschnitt **7** auf. Der Abschnitt des Strömungskanals **5** mit der höchsten Breite wird hierbei als aufgeweiteter Abschnitt **7** bezeichnet.

Der aufgeweitete Abschnitt **7** des Strömungskanals **5** kann mit einer Kavität von thermischen Strömungssensoren des Standes der Technik verglichen werden, die an Substraten als Träger der Sensorkomponente eingebracht werden, um insbesondere eine thermische Isolation zu bewirken. Hierdurch soll insbesondere erreicht werden, dass das von einem Heizelement bereitgestellte Wärmefeld im Wesentlichen durch das Fluid beeinflusst wird und keine Verfälschung von Messergebnissen durch das Substrat selbst durch eine Wärmeleitung stattfindet. Der aufgeweitete Abschnitt **7** korrespondiert entsprechend mit der Kavität von thermischen Strömungssensoren aus dem Stand der Technik, sodass auch hierdurch vorteilhaft eine Wärmeisolation bewirkt wird. Ferner ist ein weiterer Vorteil des aufgeweiteten Abschnittes **7** im erfindungsgemäßen Kontext, dass keine separate Anbringung einer Struktur zur Erreichung einer Wärmeisolierung erfolgen muss. Stattdessen kann vorteilhaft der aufgeweitete Abschnitt **7** direkt mitsamt der Bereitstellung des Strömungskanals **5** durch eine bereichsweise Entfernung des Substrates **3,** vorzugsweise ausgehend von der Rückseite **R,** ermöglicht werden.

Oberhalb des Strömungskanals auf der Vorderseite des monolithischen Substrates erstreckt sich eine Membran (in der Gesamtheit nicht zeigt). Die Membran dient insbesondere einer Abdeckung des Strömungskanals und stellt dessen obere Begrenzung dar.

Die Membran umfasst bevorzugt zudem einen Sensorbereich, d. h. einen Bereich der Membran, auf dem der thermische Sensor **9** angebracht ist, um die Messung des mindestens einen Strömungsparameters des Fluides vorzunehmen. In der Fig. 1 ist der thermische Sensor 9 lediglich flächig illustriert, kann jedoch wie hierin ausführlicher erläutert beispielsweise ein Heizelement sowie einer oder mehrere Temperatursensoren umfassen, welcher auf oder eingebettet in der Membran, insbesondere in deren dem Sensorbereich vorliegen. In der gezeigten Ausführungsform ist Sensorbereich der Membran insbesondere oberhalb des aufgeweiteten Abschnittes **7** des Strömungskanals **5** auf der Vorderseite **V** des Substrates **3** angebracht, sodass in diesem Bereich der thermische Sensor **9** positioniert werden kann.

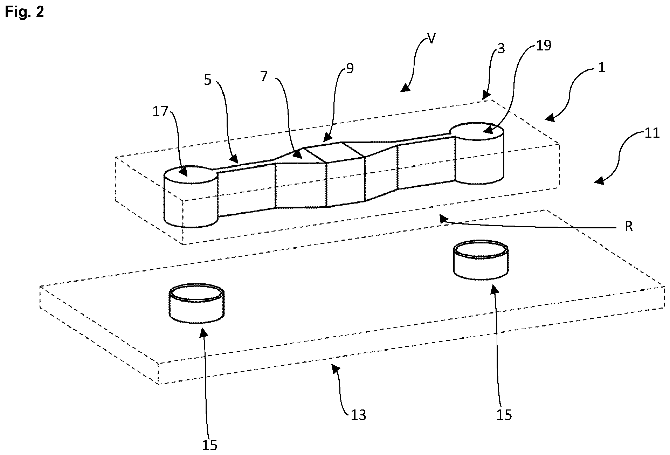

Fig. 2 zeigt eine bevorzugte Ausführungsform einer erfindungsgemäßen Strömungssensoranordnung **11.** Die Strömungssensoranordnung **11** umfasst einen Sensorchip **1** und eine Bodenplatte **13.** Die Bodenplatte **11** umfasst zwei Öffnungen **15,** welche mit dem Eintrittsbereich **17** für einen Einlass des Fluides in den Strömungskanal **5** und mit dem Austrittsbereich **19** für einen Auslass des Fluides aus dem Strömungskanal **5** korrespondieren.

Die Strömungssensoranordnung **11** bezeichnet eine Vorrichtung, welche mindestens den Sensorchip **1** und eine Bodenplatte **13** umfasst. Die Bodenplatte **13** bezeichnet eine Komponente, welche als Träger des Sensorchips **1** fungiert, sodass der Sensorchip **1** auf die Bodenplatte platziert werden kann.

Die Rückseite **R** des Substrates **3** liegt auf der Bodenplatte **13** angebracht vor. Die Bodenplatte **13** umfasst zwei Öffnungen **15,** wobei eine erste Öffnung **15** mit dem Eintrittsbereich **17** und eine zweite Öffnung **15** mit dem Austrittsbereich **19** des Strömungskanals **5** korrespondiert. Die Korrespondenz meint hierbei, dass insbesondere eine fluidische Verbindung zwischen dem Eintrittsbereich **17** und der ersten Öffnung **15** sowie dem Austrittsbereich **19** und der zweiten Öffnung **15** der Bodenplatte **13** vorliegt. Der Sensorchip **1** kann derart auf die Bodenplatte **13** aufgebracht werden, dass der Eintrittsbereich **17** sich im Wesentlichen direkt oberhalb der ersten Öffnung **15** der Bodenplatte **13** und der Austrittsbereich **19** sich im Wesentlichen direkt oberhalb der zweiten Öffnung **15** der Bodenplatte **13** befindet. Hierdurch kann dann eine Messung mittels der Strömungssensoranordnung **11** derart erfolgen, das Fluid zunächst über die erste Öffnung **15** der Bodenplatte **13** und den Eintrittsbereich **17** entlang des Strömungskanals **5** strömt und die Strömungssensor- ordnung **11** nach einer Strömung durch den Austrittsbereich **19** und der zweiten Öffnung **15** der Bodenplatte **13** verlässt.

Die Bodenplatte **13** ist an der dem Sensorchip **1** zugewandten Seite eben ausgestaltet ist und bildet eine untere Begrenzung des Strömungskanals **5**. Eine untere Begrenzung des Strömungskanals **5** meint insbesondere, dass durch die Bodenplatte **13** eine Abdeckung des Strömungskanals **5** ausgehend von der Rückseite **R** ermöglicht wird. Die Bodenplatte **13** stellt mithin eine untere Wand des Strömungskanals **5** dar. Während der Strömungskanal **5** seitlich von dem Substrat **3** ummantelt wird, wird der Strömungskanal **5** von oben durch die Membran **9** begrenzt und von unten durch die Bodenplatte **13.**

Durch die Öffnungen **15** an der Bodenplatte **13** wird ein Eintritt des Fluides in den Strömungskanal **5** über den Eintrittsbereich **17** und ein Verlassen des Strömungskanals **5** über den Austrittsbereich **19** gewährleistet.

Die Bodenplatte **13** weist insgesamt eine flache, ebene Ausgestaltung auf, bei der die Bodenplatte **13** im Wesentlichen eine konstante Höhe bzw. Dicke aufweist. Eine im Wesentlichen flache Ausgestaltung der Bodenplatte **13** hat sich für eine passgenaue Verbindung zwischen Sensorchip **1** und Bodenplatte **13** als vorteilhaft erwiesen.

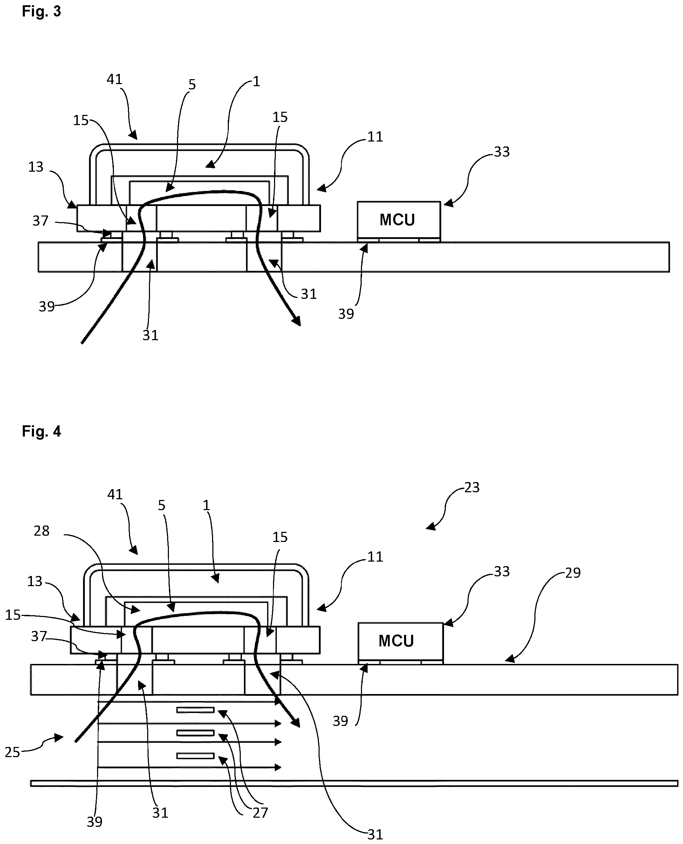

Fig. 3 zeigt eine Darstellung der Strömungssensoranordnung **11,** die auf einer Hauptplatine **29** angebracht ist. Die Strömungssensoranordnung **11** umfasst einen Sensorchip 1, welcher auf einer Bodenplatte **13** positioniert ist. Eine Kappe **41** dient der Abdeckung des Sensorchips **1**. Die Verbindung zwischen der Bodenplatte **13** und der Hauptplatine **29** kann mittels eines Dichtringes, insbesondere eines Lötringes **37,** erfolgen. Der Lötring **37** ist über einen weiteren Anschluss **39** angebracht, um eine elektrische und mechanische Verbindung zwischen einer Strömungssensoranordnung **11,** die den Sensorchip **1** und die Bodenplatte **13** umfasst, und der Hauptplatine 29 zu gewährleisten. Dabei weist die Hauptplatine **29** Hauptplatinenöffnungen **31** auf, welche mit den Öffnungen **15** der Bodenplatte **13** korrespondieren. Die elektronische Schaltung **33** ist auf der Hauptplatine **19** aufgebracht, sodass eine Datenverbindung zwischen dem thermischen Sensor des Sensorchips **1** und der elektronischen Schaltung **33** gegeben ist.

Fig. 4 zeigt schematisch eine bevorzugte Ausführungsform eines erfindungsgemäßen Systems **23,** welches eine Strömungssensoranordnung **11** und einen Hauptkanal **25** umfasst, durch den ein Fluid strömbar geführt werden kann. In dem Hauptkanal **25** liegen Durchflussbegrenzer **27** eingebracht vor. Zwischen dem Sensorchip **1** und dem Hauptkanal **25** wird derart eine fluidische Verbindung bereitgestellt, dass der Eintrittsbereich des Sensorkanals **5** an einen Bereich des Hauptkanals **25** stromaufwärts des Durchflussbegrenzers **27** angrenzt, während der Austrittsbereich des Sensorkanals **5** an einen Bereich des Hauptkanals **25** stromabwärts des Durchflussbegrenzers **27** angrenzt, sodass eine Druckdifferenz über den Durchflussbegrenzer **27** anhand einer Strömung des Fluides durch den Strömungskanal **5** des Sensorchips **1** messbar ist. Das System **23** stellt mithin eine Bypass-Konfiguration dar, bei der Strömungskanal **5** des Sensorchips 1 den Bypass **28** bzw. einen Teilabschnitt davon bildet.

**BEZUGSZEICHENLISTE**

| | |
|---|---|
| V | Vorderseite |
| R | Rückseite |
| 1 | Sensorchip |
| 3 | Substrat |
| 5 | Strömungskanal |
| 7 | Aufgeweiteter Abschnitt |
| 9 | thermischer Sensor |
| 11 | Strömungssensoranordnung |
| 13 | Bodenplatte |
| 15 | Öffnung |
| 17 | Eintrittsbereich |
| 19 | Austrittbereich |

21    Verjüngter Abschnitt
23    System
25    Hauptkanal
27    Durchflussbegrenzer
28    Bypass
29    Hauptplatine
31    Hauptplatinenöffnung
33    Elektronische Schaltung
35    Weiterer Anschluss
37    Lötring
39    Anschlussverbindung
41    Abdeckung, vorzugweise Kappe

**Literaturverzeichnis**

Billat, S., et al. Monolithic integration of micro-channel on disposable flow sensors for medical applications. Sensors and Actuators A: Physical 145 (2008): 66-74.

Palmer, Kristoffer, et al. A highly integratable silicon thermal gas flow sensor. Journal of Micromechanics and Microengineering 22.6 (2012): 065015.

Shaterian, Zahra. Single-ended and differentially operated microwave microfluidic sensors for biomedical applications. Journal of Medical Signals and Sensors 13.2 (2023): 84.

**Patentansprüche**

**1.** Sensorchip (1) zur Messung mindestens eines Strömungsparameters eines Fluides umfassend ein Substrat (3) mit einer Vorderseite (V) und einer Rückseite (R) und einen thermischen Sensor umfassend ein Heizelement zur Bereitstellung eines Wärmefeldes und eine Sensorkomponente zur Erfassung einer Temperaturantwort des thermischen Sensors in Abhängigkeit eines Einflusses des Fluides auf das Wärmefeld,
**dadurch gekennzeichnet, dass**
das Substrat (3) monolithisch ausgebildet ist, der thermische Sensor (9) auf der Vorderseite (V) des Substrat (3) positioniert vorliegt und unterhalb des thermischen Sensors innerhalb des Substrates (3) ein Strömungskanal (5) vorliegt wird, welcher ausgehend von der Rückseite (R) durch bereichsweise Entfernung des Substrates (5), vorzugsweise ausgehend von der Rückseite (R), gebildet wurde und einen Eintrittsbereich (17) für einen Einlass des Fluides in den Strömungskanal (5) und einen Austrittsbereich (19) für einen Auslass des Fluides aus dem Strömungskanal (5) aufweist, sodass auf Basis der Temperaturantwort des thermischen Sensors (9) der mindestens eine Strömungsparameters des Fluides messbar ist.

**2.** Sensorchip (1) nach dem vorherigen Anspruch
**dadurch gekennzeichnet, dass**
der Strömungskanal (5) eine Höhe aufweist, welche im Wesentlichen einer Höhe des monolithischen Substrates entspricht, wobei eine Breite des Strömungskanals (5) an dessen schmalstem Abschnitt vorzugsweise kleiner ist als die Höhe des Strömungskanals, vorzugweise um einen Faktor von 1,5, 2, 3, 4, oder mehr.

**3.** Sensorchip (1) nach einem oder mehreren der vorherigen Ansprüche
**dadurch gekennzeichnet, dass**

der Strömungskanal (5) eine im Wesentlichen konstante Breite, beispielsweise von weniger als 500 $\mu$m, vorzugsweise weniger als 100 $\mu$m, 50 $\mu$m oder weniger als 30 $\mu$m aufweist, und/oder
der Strömungskanal (5) mindestens einen verjüngten Abschnitt (21) oder aufgeweiteten Abschnitt (7) aufweist, wobei die Breite des verjüngten Abschnittes vorzugsweise weniger als 500 $\mu$m, vorzugsweise weniger als 100 $\mu$m, 50 $\mu$m oder weniger als 30 $\mu$m beträgt.

**4.** Sensorchip (1) nach einem oder mehreren der vorherigen Ansprüche

**dadurch gekennzeichnet, dass**
der Strömungskanal (5) eine Höhe von 100 - 1 000 μm, bevorzugt von 200 - 500 μm, und/oder eine Länge von 100 - 10 000 μm, bevorzugt von 500 - 2 000 μ m.

5. Sensorchip (1) nach einem oder mehreren der vorherigen Ansprüche
**dadurch gekennzeichnet, dass**

die Sensorkomponente durch einen Temperatursensor gebildet wird,
wobei bevorzugt der Temperatursensor ausgewählt ist aus einer Gruppe umfassend ein Thermoelement, eine Diode, ein Thermistor und/oder eine Thermosäule und/oder das Heizelement ein elektrisches Heizelement ist, bevorzugt ein Heizwiderstand ist.

6. Sensorchip (1) nach einem oder mehreren der vorherigen Ansprüche
**dadurch gekennzeichnet, dass**
der Sensorchip (1) eine Membran aufweist, welche sich oberhalb des Strömungskanals (5) auf einer Vorderseite (V) des monolithischen Substrates erstreckt, wobei die Membran vorzugsweise einen Sensorbereich umfasst, auf welchem der thermische Sensor (9) positioniert ist, wobei bevorzugt der Sensorbereich der Membran ein dielektrisches Material umfasst, ausgewählt ist aus einer Gruppe umfassend Siliziumnitrid, Siliziumdioxid, Aluminiumoxid, Aluminiumnitrid, Polyimid und/oder ein polymeres Material.

7. Sensorchip (1) nach einem oder mehreren der vorherigen Ansprüche
**dadurch gekennzeichnet, dass**
der Sensorchip (1) eine elektronische Schaltung aufweist und/oder mit einer elektronischen Schaltung (33) verbunden ist, wobei die elektronische Schaltung dazu konfiguriert ist, das Heizelement anzusteuern und/oder auf Basis der Temperaturantwort des thermischen Sensors (9) den mindestens einen Strömungsparameter des Fluides zu ermitteln.

8. Sensorchip (1) nach einem oder mehreren der vorherigen Ansprüche
**dadurch gekennzeichnet, dass**
die Sensorkomponente mit einer Anschlussverbindung elektrisch verbunden ist, wobei bevorzugt die Anschlussverbindung ausgewählt ist aus einer Gruppe umfassend einen Anschlusspad, einer Leiterbahn, einen Leiterbahnstreifen, einen Bonddraht, eine Lötverbindung, einen elektrisch leitfähigen Klebstoff, einen Bump und/oder eine Durchkontaktierung.

9. Sensorchip (1) nach einem oder mehreren der vorherigen Ansprüche
**dadurch gekennzeichnet, dass**
das Substrat (3) Glas, Keramik und/oder ein Halbleitermaterial umfasst, wobei das Halbleitermaterial vorzugsweise ausgewählt aus einer Gruppe umfassend Monosilizium, Polysilizium, Siliziumcarbid, Siliziumgermanium, Germanium, Galliumarsenid, Galliumnitrid und/oder Indiumphosphid.

10. Verfahren zur Herstellung eines Sensorchips (1) nach einem oder mehreren der vorherigen Ansprüche umfassend folgende Schritte:

a) Bereitstellung eines Substrates (3), welches eine Vorderseite (V) und eine Rückseite (R) aufweist und monolithisch ausgebildet ist,
b) bereichsweise Entfernung des Substrates (5), vorzugsweise ausgehend von der Rückseite (R), zur Anbringung eines Strömungskanals (5) umfassend einen Eintrittsbereich (17) und einen Austrittsbereich (19) in dem Substrat (3),
c) Positionierung eines thermischen Sensors auf der Vorderseite (V).

11. Strömungssensoranordnung (11) umfassend einen Sensorchip (1) nach einem oder mehreren der vorherigen Ansprüche 1 - 9 und eine Bodenplatte (13), wobei die Bodenplatte (13) mindestens eine Öffnung (15) aufweist, welche mit dem Eintrittsbereich (17) für einen Einlass des Fluides in den Strömungskanal (5) und/oder dem Austrittsbereich (19) für einen Auslass des Fluides aus dem Strömungskanal (5) korrespondiert, wobei die Bodenplatte (13) vorzugsweise zwei Öffnungen (15) aufweist, welche mit dem Eintrittsbereich (17) für einen Einlass des Fluides in den Strömungskanal (5) und/oder dem Austrittsbereich (19) für einen Auslass des Fluides aus dem Strömungskanal (5) korrespondieren.

**12.** Strömungssensoranordnung (11) nach dem vorherigen Anspruch,
**dadurch gekennzeichnet, dass**
die Bodenplatte (13) mindestens an einer dem Sensorchip (1) zugewandten Seite eben ausgestaltet ist und eine untere Begrenzung des Strömungskanals (5) bildet und/oder die Bodenplatte (13) ein Schaltungsträger, vorzugweise eine Leiterplatte ist.

**13.** Verwendung eines Sensorchips (1) nach einem der vorherigen Ansprüche 1 - 9 oder einer Strömungssensoranordnung (11) nach einem der vorherigen Ansprüche 11 oder 12 zur Messung eines Strömungsparameters eines Fluides in einem Hauptkanal (25) in einer Bypass-Konfiguration.

**14.** Verwendung nach dem vorherigen Anspruch
**dadurch gekennzeichnet, dass**
in dem Hauptkanal (25) ein Durchflussbegrenzer (27) eingebracht vorliegt, wobei eine fluidische Verbindung zwischen Sensorchip (1) und Hauptkanal (25) derart bereitgestellt wird, dass der Eintrittsbereich (17) des Sensorchips an einen Bereich des Hauptkanals (25) stromaufwärts des Durchflussbegrenzers (27) angrenzt, während der Austrittsbereich (19) des Sensorchips (1) an einen Bereich des Hauptkanals (25) stromabwärts des Durchflussbegrenzers (27) angrenzt, sodass eine Druckdifferenz über den Durchflussbegrenzer (27) anhand einer Strömung des Fluides durch den Strömungskanals des Sensorchips (1) messbar ist.

**15.** System (23) umfassend

a. einen Sensorchip (1) nach einem oder mehreren der vorherigen Ansprüche 1 - 9 oder einer Strömungssensoranordnung (11) nach einem der vorherigen Ansprüche 11 oder 12 und
b. einen Hauptkanal (25) durch den ein Fluid strömbar geführt werden kann,

wobei in dem Hauptkanal (25) ein Durchflussbegrenzer (27) eingebracht vorliegt und wobei eine fluidische Verbindung zwischen Sensorchip (1) und Hauptkanal (25) derart bereitgestellt vorliegt, dass der Eintrittsbereich (17) des Sensorchips (1) an einen Bereich des Hauptkanals (25) stromaufwärts des Durchflussbegrenzers (27) angrenzt, während der Austrittsbereich (19) des Sensorchips (1) an einen Bereich des Hauptkanals (25) stromabwärts des Durchflussbegrenzers (27) angrenzt, sodass eine Druckdifferenz über den Durchflussbegrenzer (27) anhand einer Strömung des Fluides durch den Strömungskanals (5) des Sensorchips (1) messbar ist.

**Fig. 1**

A

B

C

**Fig. 2**

**Fig. 3**

**Fig. 4**

| Europäisches Patentamt European Patent Office Office européen des brevets | **EUROPÄISCHER RECHERCHENBERICHT** | **Nummer der Anmeldung** EP 23 19 6561 |
|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 124 632 A (LO LIEH-HSI [TW] ET AL) 26. September 2000 (2000-09-26) | 1,2,5-12 | INV. G01F1/684 |
| Y | * Spalte 2, Zeile 19 – Zeile 21 * * Abbildung 1 * ----- | 13-15 | G01F1/692 G01F5/00 G01F15/18 |
| X | CANQIAN YANG ET AL: "MONOLITHIC FLOW SENSOR FOR MEASURING MILLILITRE PER MINUTE LIQUID FLOW", SENSORS AND ACTUATORS A: PHYSICAL, ELSEVIER BV, NL, Bd. A33, Nr. 3, 1. Juni 1992 (1992-06-01), Seiten 143-153, XP000297405, ISSN: 0924-4247 * Seite 143, rechte Spalte, letzter Absatz – Seite 145, rechte Spalte, Absatz 1 * * Abbildungen 1a,1b,1c,2 * ----- | 1-12 | ADD. G01F1/688 |
| X,D | BILLAT S ET AL: "Monolithic integration of micro-channel on disposable flow sensors for medical applications", SENSORS AND ACTUATORS A: PHYSICAL, ELSEVIER BV, NL, Bd. 145-146, 1. Juli 2008 (2008-07-01), Seiten 66-74, XP022716417, ISSN: 0924-4247, DOI: 10.1016/J.SNA.2007.10.059 [gefunden am 2007-10-30] * Seite 66, rechte Spalte, Absatz 1 – Seite 68, rechte Spalte, Absatz 1; Abbildungen 1,2,5 * ----- | 1-12 | RECHERCHIERTE SACHGEBIETE (IPC) G01F |
| Y | EP 3 457 093 A1 (SENSIRION AG [CH]) 20. März 2019 (2019-03-20) * Abbildung 1 * * Anspruch 1 * ----- | 13-15 | |

Der vorliegende Recherchenbericht wurde für alle Patentansprüche erstellt

| Recherchenort | Abschlußdatum der Recherche | Prüfer |
|---|---|---|
| Den Haag | 29. Februar 2024 | Verdoodt, Erik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**EP 4 521 074 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**29-02-2024**

| Im Recherchenbericht angeführtes Patentdokument | Datum der Veröffentlichung | Mitglied(er) der Patentfamilie | Datum der Veröffentlichung |
|---|---|---|---|
| US 6124632 A | 26-09-2000 | KEINE | |
| EP 3457093 A1 | 20-03-2019 | KEINE | |

EPO FORM P0461

Für nähere Einzelheiten zu diesem Anhang : siehe Amtsblatt des Europäischen Patentamts, Nr.12/82

**EP 4 521 074 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11280649 B2

**In der Beschreibung aufgeführte Nicht-Patentliteratur**

- **BILLAT, S. et al.** Monolithic integration of micro-channel on disposable flow sensors for medical applications. *Sensors and Actuators A: Physical*, 2008, vol. 145, 66-74
- **PALMER, KRISTOFFER et al.** A highly integratable silicon thermal gas flow sensor. *Journal of Micromechanics and Microengineering*, 2012, vol. 22 (6), 065015
- **SHATERIAN, ZAHRA**. Single-ended and differentially operated microwave microfluidic sensors for biomedical applications. *Journal of Medical Signals and Sensors*, 2023, vol. 13 (2), 84